# FASCICULE DE BREVET EUROPEEN

(11) **EP 2 557 973 B1**
(45) Date de publication et mention de la délivrance du brevet: **21.05.2014**
(21) Numéro de dépôt: 11731008.6
(22) Date de dépôt: 12.04.2011
(51) Int. Cl.: A47J 27/08, A47J 27/09

(54) **APPAREIL DE CUISSON D'ALIMENTS SOUS PRESSION POURVU D'UNE PIECE DE TRANSMISSION MOBILE**
VORRICHTUNG ZUM DAMPFGAREN VON SPEISEN MIT BEWEGLICHEM ÜBERTRAGUNGSTEIL
APPARATUS FOR PRESSURE COOKING FOODSTUFFS, PROVIDED WITH A MOVING TRANSMISSION COMPONENT

(30) Priorité: 13.04.2010 FR 1052800
(43) Date de publication de la demande: 20.02.2013
(73) Titulaire: SEB S.A., 69130 Ecully (FR)
(72) Inventeur: CHAMEROY, Eric, F-21260 Veronnes (FR); CARTIGNY, Michel, Pierre, F-21310 Mirebeau (FR); RHETAT, Eric, F-21000 Dijon (FR)
(74) Mandataire: Weber, Jean-François
(86) Numéro de dépôt international: PCT/FR2011/050834
(87) Numéro de publication internationale: WO 2011/128577

(56) Documents cités:
- EP-A2- 1 342 440

## Description

### DOMAINE TECHNIQUE

La présente invention se rapporte au domaine technique général des appareils de cuisson d'aliments sous pression, notamment domestiques, comprenant une cuve et un couvercle destinés à être associés pour former une enceinte de cuisson étanche, lesdits appareils étant destinés à assurer la cuisson sous pression de vapeur des aliments contenus dans la cuve.

La présente invention concerne plus particulièrement un appareil de cuisson d'aliments sous pression comprenant une cuve et un couvercle destinés à être associés pour former une enceinte de cuisson, un moyen de verrouillage / déverrouillage mobile entre une position de verrouillage et une position de déverrouillage du couvercle relativement à la cuve, un moyen de gestion de pression mobile entre une pluralité de positions pour agir sur le niveau de pression régnant dans l'enceinte et un sélecteur déplaçable manuellement pour commander le déplacement du moyen de verrouillage / déverrouillage et celui dudit moyen de gestion de pression.

### TECHNIQUE ANTERIEURE

On connaît déjà des appareils de cuisson sous pression comprenant une cuve et un couvercle destiné à être verrouillé sur la cuve par l'intermédiaire d'un moyen de verrouillage / déverrouillage susceptible d'évoluer entre une position de verrouillage du couvercle relativement à la cuve à une position de déverrouillage. Ces appareils connus sont également généralement dotés d'un moyen de décompression permettant de faire chuter la pression au sein de l'appareil, notamment en fin de processus de cuisson, pour ouvrir le couvercle dans des conditions de sécurité acceptables pour l'utilisateur.

Un tel appareil est décrit dans le document EP 1 342 440 A2.

Dans ces appareils connus, le passage du moyen de verrouillage / déverrouillage de sa position de verrouillage à sa position de déverrouillage (et vice-versa) est piloté par un premier organe de commande, lequel comprend par exemple deux boutons-poussoirs pour commander respectivement le verrouillage et le déverrouillage.

La commande du moyen de décompression est quant à elle effectuée à l'aide d'un deuxième organe de commande distinct du premier organe de commande, et se présentant par exemple sous la forme d'une bague rotative.

Cette multiplicité d'organes de commande peut rendre le maniement de ces appareils peu ergonomique, en contraignant l'utilisateur à effectuer une séquence d'opérations distinctes pour activer la décompression et déverrouiller le couvercle, en vue d'accéder aux aliments contenus dans l'appareil. De surcroît, la multiplicité et la diversité des organes de commande présents sur ces autocuiseurs de l'art antérieur peuvent engendrer des conceptions mécaniques complexes, susceptibles de conduire à des risques en matière de fiabilité.

Afin notamment de remédier à ces problèmes, il a été proposé un appareil de cuisson d'aliments sous pression doté d'un organe de commande unique et commun permettant de commander à la fois le verrouillage / déverrouillage et la décompression. Cet organe de commande unique et commun se présente sous la forme d'une poignée rotative capable d'être déplacée manuellement par rotation entre trois positions, savoir une position de verrouillage étanche autorisant la montée en pression de l'appareil, une position de verrouillage et décompression permettant une fuite de vapeur de l'intérieur de l'enceinte de cuisson vers l'extérieur alors que le couvercle reste verrouillé sur la cuve et une position de déverrouillage et décompression autorisant la désolidarisation du couvercle et de la cuve.

Un tel appareil, s'il donne globalement satisfaction, n'en présente pas moins certains inconvénients.

Ainsi, cet appareil ne permet pas de sélectionner différents niveaux de pression de fonctionnement. Seule la cuisson à un niveau de pression de fonctionnement prédéterminé unique, correspondant à la position de verrouillage étanche, est possible. Cela provient du fait que la conception retenue se prête mal à la mise en oeuvre d'une multiplicité de positions distinctes de la poignée rotative correspondant à différents niveaux de pression. En effet, la poignée rotative entraîne en rotation une plaque pourvue de rampes coopérant d'une part avec le système de mâchoires permettant le verrouillage / déverrouillage et d'autre part avec la tête de la soupape de régulation. L'ajout de positions supplémentaires, autres que les positions de verrouillage étanche, de verrouillage et décompression et de déverrouillage et décompression, nécessiterait la mise en oeuvre d'une plaque rotative de diamètre beaucoup plus important, ce qui peut constituer un inconvénient en matière d'encombrement et d'ergonomie notamment. En outre, cette plaque rotative serait fragilisée par des lumières de longueurs importantes formant les rampes de commande, ce qui pourrait introduire une souplesse et une fragilité de cette pièce induisant un risque en matière de fiabilité et de sécurité d'utilisation.

De surcroît, la conception de cet appareil de l'art antérieur peut conduire à certaines erreurs ou difficultés d'utilisation. De telles erreurs peuvent en particulier provenir de l'extrême proximité entre le geste que doit accomplir l'utilisateur pour verrouiller le couvercle, et celui qu'il doit accomplir pour déverrouiller le couvercle. En réalité, la cinématique de verrouillage de cet appareil de l'art antérieur est strictement symétrique à la cinématique de déverrouillage. Ainsi, une rotation de la poignée selon une course d'environ 45 degrés en sens horaire permet de déplacer progressivement les mâchoires en direction radiale centrifuge jusqu'à ce qu'elles atteignent la position de déverrouillage, tandis que le verrouillage du couvercle est obtenu par une rotation de même amplitude angulaire mais en sens anti-horaire de la même poignée rotative, qui entraîne le déplacement progressif, en direction radiale centripète, des mâchoires jusqu'à leur position de verrouillage. Cette grande proximité entre la cinématique de verrouillage et la cinématique de déverrouillage peut donc entraîner une confusion pour l'utilisateur, qui peut penser, en dépit de repères visuels adaptés, avoir verrouillé l'appareil, alors qu'il est en fait déverrouillé, et inversement. De plus, la bonne réalisation du verrouillage et du déverrouillage du couvercle est directement liée à une rotation complète de la poignée. De ce fait, si l'utilisateur tourne par exemple la poignée selon une course angulaire de 40 degrés au lieu de 45 degrés (par exemple) nécessaires au verrouillage complet de l'appareil, il est possible que l'appareil ne soit pas complètement verrouillé, ce qui empêcherait par la suite le déroulement normal du cycle de cuisson. Enfin, il convient de relever que la sensation éprouvée par l'utilisateur en manipulant la poignée rotative est strictement la même, au sens de rotation près, lorsque l'utilisateur verrouille ou déverrouille le couvercle.

Ceci peut constituer un facteur de confusion et d'inquiétude pour l'utilisateur, dans la mesure où ce dernier peut éprouver des doutes, fondés ou non, quant à la réalisation effective du verrouillage ou du déverrouillage souhaité.

### EXPOSE DE L'INVENTION

Les objets assignés à l'invention visent en conséquence à porter remède aux divers inconvénients énumérés précédemment et à proposer un nouvel appareil de cuisson d'aliments qui, tout en étant de construction simple et compacte, autorise une multiplicité de modes de fonctionnement distincts et est facile, intuitif et rassurant à utiliser.

Un autre objet de l'invention vise à proposer un nouvel appareil de cuisson d'aliments sous pression dont le fonctionnement est particulièrement intuitif.

Un autre objet de l'invention vise à proposer un nouvel appareil de cuisson d'aliments sous pression particulièrement compact, fiable et léger.

Un autre objet de l'invention vise à proposer un nouvel appareil de cuisson d'aliments sous pression particulièrement ergonomique.

Un autre objet de l'invention vise à proposer un nouvel appareil de cuisson d'aliments sous pression qui limite les possibilités pour l'utilisateur de commettre des erreurs dans son maniement.

Un autre objet de l'invention vise à proposer un nouvel appareil de cuisson d'aliments sous pression dont la conception et le montage sont simplifiés.

Un autre objet de l'invention vise à proposer un nouvel appareil de cuisson d'aliments sous pression dont la conception est particulièrement compacte.

Un autre objet de l'invention vise à proposer un nouvel appareil de cuisson d'aliments sous pression qui permet un verrouillage franc et net du couvercle relativement à la cuve.

Un autre objet de l'invention vise à proposer un nouvel appareil de cuisson d'aliments sous pression de conception particulièrement robuste.

Un autre objet de l'invention vise à proposer un nouvel appareil de cuisson d'aliments sous pression particulièrement pratique à utiliser.

Les objets assignés à l'invention sont atteints à l'aide d'un appareil de cuisson d'aliments sous pression comprenant une cuve et un couvercle destinés à être associés pour former une enceinte de cuisson, un moyen de verrouillage / déverrouillage mobile entre une position de verrouillage et une position de déverrouillage du couvercle relativement à la cuve, un moyen de gestion de pression mobile entre une pluralité de positions pour agir sur le niveau de pression régnant dans l'enceinte, un sélecteur déplaçable manuellement pour commander le déplacement du moyen de verrouillage / déverrouillage et celui dudit moyen de gestion de pression, ledit appareil étant caractérisé en ce qu'il comprend une première pièce de transmission qui d'une part est mobile relativement à un dispositif mobile constitué par le moyen de verrouillage / déverrouillage ou le moyen de gestion de pression et d'autre part est conçue pour agir sur la position dudit dispositif mobile en réponse à un déplacement correspondant du sélecteur, ladite première pièce de transmission étant en outre conçue pour pouvoir se déplacer pendant que le sélecteur reste sensiblement immobile et/ou rester sensiblement immobile pendant que le sélecteur se déplace.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :

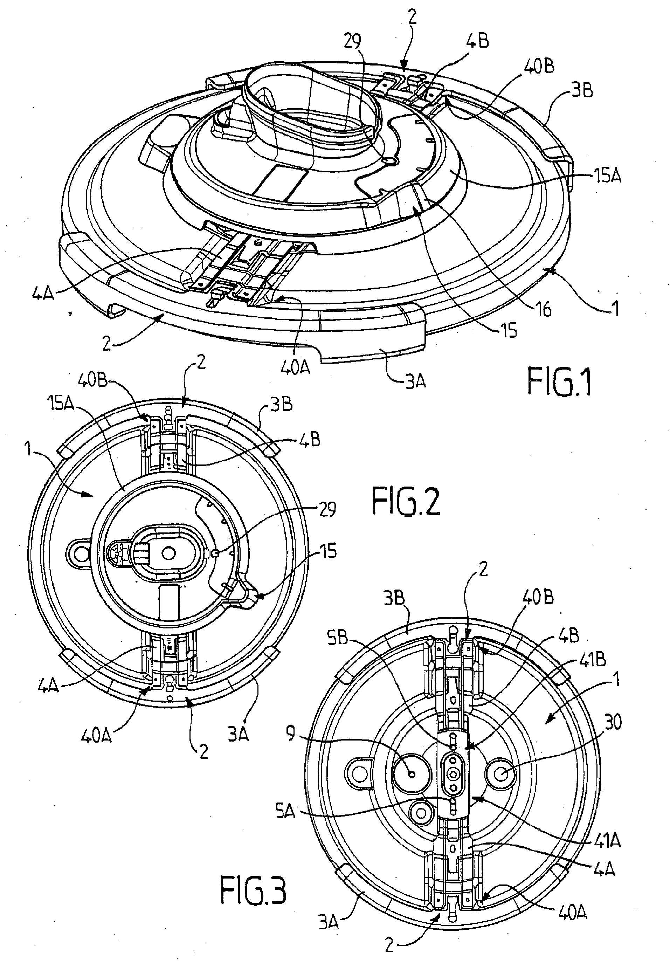

- La figure 1 illustre, selon une vue en perspective, un sous-ensemble de couvercle d'un appareil de cuisson conforme à un premier mode de réalisation de l'invention, ledit sous-ensemble étant formé par le couvercle proprement dit, sur lequel sont montés d'une part le moyen de verrouillage / déverrouillage (constitué en l'espèce par un système de mâchoires montées à translation radiale) illustré en position de déverrouillage et d'autre part un module de commande monté sur le couvercle, ledit module de commande incorporant le moyen de gestion de pression et le sélecteur déplaçable manuellement pour commander le déplacement du moyen de verrouillage / déverrouillage et celui du moyen de gestion de pression.
- La figure 2 illustre, selon une vue de dessus, le sous-ensemble de la figure 1 avec son moyen de verrouillage / déverrouillage qui se trouve toujours en position de déverrouillage.
- La figure 3 est une vue similaire à celle de la figure 2 aux différences près que le module de commande a été omis et que le moyen de verrouillage / déverrouillage se trouve en position de verrouillage.
- La figure 4 illustre, selon une vue en perspective, un détail de réalisation du module de commande des figures 1 et 2, le module de commande se trouvant dans une configuration de verrouillage et décompression dans laquelle le moyen de verrouillage / déverrouillage est en position de verrouillage tandis que l'intérieur de l'enceinte de cuisson est mis en communication avec l'extérieur de façon permanente pour permettre une chute de la pression régnant dans l'enceinte de cuisson.
- La figure 5 illustre, selon une vue de dessus, le détail de réalisation de la figure 4.
- La figure 6 est sensiblement similaire à la figure 4 à la différence près que le sélecteur et la pièce qui le porte n'ont pas été représentés.
- La figure 7 est sensiblement similaire à la figure 6 à la différence près qu'une pièce de commande interposée entre le sélecteur et la première pièce de transmission pour agir sur la position de cette dernière en réponse à un déplacement du sélecteur n'a pas été représentée.
- La figure 8 correspond à la figure 7 en vue de dessus.
- La figure 9 illustre, selon une vue en perspective, la coopération de la pièce de commande et de la première pièce de transmission permettant à la pièce de commande d'entraîner la première pièce de transmission vers une position correspondant au déverrouillage du couvercle relativement à la cuve.
- La figure 10 illustre, selon une vue en perspective de dessous, la première pièce de transmission de l'appareil des figures 1 à 9.
- La figure 11 est une vue similaire à celle de la figure 5 à la différence près que le module de commande se trouve dans une configuration de verrouillage étanche avec régulation de pression à une première valeur de consigne.
- La figure 12 est une vue similaire à celle de la figure 11 à la différence près que le module de commande se trouve dans une configuration de verrouillage étanche avec régulation de pression à une deuxième valeur de consigne.
- La figure 13 représente une vue similaire à celle de la figure 4 à la différence près que le module de commande se trouve dans une configuration de déverrouillage selon laquelle le moyen de verrouillage / déverrouillage se trouve en position de déverrouillage du couvercle relativement à la cuve tandis que l'intérieur de l'enceinte est mis en communication permanente avec l'extérieur de façon à empêcher toute montée en pression de l'enceinte.
- La figure 14 illustre, selon une vue de dessus, le module de commande de la figure 13.
- La figure 15 est une vue similaire à celle de la figure 7 à la différence près que le module de commande se trouve dans sa configuration de déverrouillage illustrée également aux figures 13 et 14.
- La figure 16 est une vue de dessus du détail de réalisation illustré à la figure 15.
- La figure 17 illustre, selon une vue en perspective, le module de commande des figures précédentes à l'instant où la pièce de commande vient engager la première pièce de transmission pour déclencher un verrouillage brusque du couvercle relativement à la cuve par retour élastique de la première pièce de transmission vers une position de rappel correspondant au verrouillage.
- La figure 18 illustre un détail de réalisation de la figure 17 où seules la première pièce de transmission et la pièce de commande sont représentées.
- La figure 19 est une vue de détail agrandie de la figure 17.
- La figure 20 illustre, selon une vue en perspective, un module de commande d'un appareil de cuisson conforme à un deuxième mode de réalisation, ledit module de commande se trouvant dans une configuration de déverrouillage correspondant à celle de la figure 13 en ce qui concerne le premier mode de réalisation.
- La figure 21 illustre, selon une vue en perspective, le module de la figure 20 dans une configuration de verrouillage et décompression correspondant à celle de la figure 4 en ce qui concerne le premier mode de réalisation.
- La figure 22 illustre, selon une vue en perspective, le module de commande des figures 20 et 21 dans une configuration de verrouillage étanche avec régulation de pression à une première valeur de consigne, correspondant à celle illustrée à la figure 11 pour le premier mode de réalisation.
- La figure 23 illustre, selon une vue en perspective, le module de commande des figures 20 à 22 dans une configuration de verrouillage étanche avec régulation de pression à une deuxième valeur de consigne, correspondant à celle illustrée à la figure 12 en ce qui concerne le premier mode de réalisation.
- La figure 24 illustre un détail de réalisation du module de commande des figures 20 à 23, et plus précisément la coopération d'une pièce d'arrêt avec une pièce de commande permettant le verrouillage brusque du couvercle relativement à la cuve.
- La figure 25 est une vue similaire à celle de la figure 24 mais qui illustre cette fois le blocage de la première pièce de transmission par la pièce d'arrêt afin d'empêcher le retour élastique de la première pièce de transmission dans une position correspondant au verrouillage.

### MEILLEURE MANIERE DE REALISER L'INVENTION

L'appareil de cuisson d'aliments sous pression conforme à l'invention est destiné à assurer la cuisson de différents aliments à un niveau de pression sensiblement supérieur à la pression atmosphérique, de préférence dans un contexte domestique, étant entendu que l'invention peut également concerner des appareils professionnels ou semi-professionnels.

L'appareil conforme à l'invention est donc avantageusement un ustensile de cuisine présentant un caractère portatif (c'est-à-dire qu'il peut être déplacé manuellement) et indépendant. De façon classique, l'appareil conforme à l'invention est conçu pour monter en pression exclusivement sous l'effet d'une source de chauffe (embarquée ou externe), sans apport de pression externe. De façon préférentielle, l'appareil de cuisson conforme à l'invention est un autocuiseur.

L'appareil de cuisson sous pression conforme à l'invention comprend une cuve (non illustrée) formant un récipient de cuisson et présentant avantageusement sensiblement une symétrie de révolution selon un axe vertical. Par la suite, l'adjectif « *axial* » se référa à la direction de cet axe de symétrie, direction qui s'apparente donc à la direction verticale lorsque l'appareil est en fonctionnement normal, c'est-à-dire repose sur un plan horizontal. La cuve est de manière classique fabriquée à partir d'un matériau métallique tel que l'acier inoxydable, et est par exemple pourvue d'un fond thermo-conducteur solidarisé à la cuve par toute technique appropriée (frappe à chaud ou à froid par exemple).

L'appareil conforme à l'invention comprend également un couvercle 1, lesdits cuve et couvercle 1 étant destinés à être associés pour former une enceinte de cuisson. Plus précisément, le couvercle 1 est destiné à être rapporté et verrouillé sur la cuve pour former avec cette dernière une enceinte de cuisson sensiblement étanche, c'est-à-dire suffisamment hermétique pour permettre une montée en pression de l'intérieur de l'enceinte, y compris à des niveaux élevés (par exemple excédant la pression atmosphérique de 4,5 à 120 kPa). Le couvercle 1 est de préférence de forme générale discoïde, et s'étend avantageusement dans un plan moyen sensiblement parallèle au plan moyen d'extension du fond de la cuve lorsqu'il est rapporté et verrouillé sur cette dernière. Le couvercle 1 est avantageusement réalisé en un matériau rigide, comme par exemple un matériau métallique.

L'appareil de cuisson d'aliments sous pression comprend également un moyen de verrouillage/ déverrouillage 2 qui permet le verrouillage du couvercle 1 sur la cuve afin d'éviter de voir le couvercle 1 échapper brutalement sous l'effet de la montée en pression de l'enceinte formée par la cuve et le couvercle.

Le moyen de verrouillage / déverrouillage 2 est mobile entre une position de verrouillage (illustrée à la figure 3) et une position de déverrouillage (illustrée aux figures 1 et 2) du couvercle 1 relativement à la cuve. Le moyen de verrouillage / déverrouillage 2 peut être constitué par tout moyen de verrouillage / déverrouillage mobile connu de l'homme du métier. De préférence, le moyen de verrouillage / déverrouillage 2 est monté à translation sur le couvercle 1, comme illustré aux figures 1 à 3. Avantageusement, le moyen de verrouillage / déverrouillage 2 comprend au moins d'une part un élément de verrouillage 3A conçu pour assujettir le couvercle 1 à la cuve en position de verrouillage et permettre le désassemblage du couvercle 1 relativement à la cuve en position de déverrouillage. Dans l'exemple illustré aux figures, le moyen de verrouillage / déverrouillage 2 comprend deux éléments de verrouillage 3A, 3B montés de manière diamétralement opposée sur le couvercle 1 et conçu pour coulisser radialement sur le couvercle 1 entre une position déployée (illustrée à la figure 2) correspondant au verrouillage, et une position rétractée (illustrée aux figures 1 et 3) correspondant au verrouillage.

Dans l'exemple illustré aux figures, chaque élément de verrouillage 3A, 3B est constitué par une mâchoire, c'est-à-dire un profilé métallique dont la section transversale est sensiblement en forme de U, chaque mâchoire étant destinée à venir enserrer, sur un secteur angulaire correspondant à la longueur de la mâchoire, à la fois le bord du couvercle et celui de la cuve. Un tel moyen de verrouillage / déverrouillage 2 à mâchoire(s), tel que celui mis en oeuvre dans le mode de réalisation des figures 1 à 3, est bien connu en tant que tel, et ne sera donc pas décrit plus avant ici. A titre alternatif, le moyen de verrouillage / déverrouillage 2 peut mettre en oeuvre, à la place des mâchoires, des segments métalliques destinés à pénétrer dans des ouvertures ménagées dans la cuve, à la manière d'un pêne dans une gâche. D'autres types de moyens de verrouillage / déverrouillage mobiles sont également envisageables, sans pour autant que l'on sorte du cadre de l'invention.

Avantageusement, et comme illustré aux figures, le moyen de verrouillage / déverrouillage 2 comprend au moins un bras 4A guidé en translation relativement au couvercle 1 et s'étendant entre une extrémité externe 40A reliée à l'élément de verrouillage 4A et une extrémité interne 41A pourvue d'un pion d'entraînement 5A dont la fonction sera précisée dans ce qui suit.

Bien entendu, le moyen de verrouillage / déverrouillage 2 comprend autant de bras qu'il y a d'éléments de verrouillage. Ainsi, dans l'exemple illustré aux figures, le moyen de verrouillage / déverrouillage 2 comprend deux bras 4A, 4B guidés en translation relativement au couvercle et s'étendant chacun entre une extrémité externe 40A, 40B reliée à l'élément de verrouillage et une extrémité interne 41A, 41B pourvue d'un pion d'entraînement correspondant 5A, 5B. Les pions 5A, 5B, bras 4A, 4B et éléments de verrouillage 3A, 3B constituent ainsi deux sous-ensembles unitaires respectifs qui coulissent radialement sur le couvercle 1.

De préférence, le moyen de verrouillage / déverrouillage 2 est soumis à une force de rappel qui tend à le rappeler en permanence dans sa position de verrouillage. A cette fin, chaque bras 4A, 4B est par exemple relié vers son extrémité externe correspondante 40A, 40B à un ressort de rappel qui exerce en permanence une force de rappel radiale centripète sur le sous-ensemble pion/bras/mâchoire. De préférence, le ressort de rappel en question (non illustré) relie chacune des extrémités externes 40A, 40B des bras 4A, 4B, lesquels sont disposés de manière diamétralement opposée, de façon qu'avec un unique ressort on effectue un rappel simultané des deux éléments de verrouillage 3A, 3B.

L'appareil de cuisson d'aliments sous pression comprend par ailleurs un moyen de gestion de pression 6 mobile entre une pluralité de positions pour agir sur le niveau de pression régnant dans l'enceinte. Le moyen de gestion de pression 6 peut agir de différentes façons sur le niveau de pression régnant dans l'enceinte. Par exemple, le moyen de gestion de pression 6 peut permettre de modifier la valeur de consigne à laquelle la pression est régulée à l'intérieur de l'enceinte. A titre alternatif et/ou complémentaire, le moyen de gestion de pression 6 peut permettre la décompression de l'enceinte sur commande de l'utilisateur, en vue de déverrouiller le couvercle.

Dans les modes de réalisation préférentiels illustrés aux figures, le moyen de gestion de pression 6 présente toutes les fonctions envisagées ci-avant, et comprend à cet effet différents organes permettant d'obtenir lesdites fonctions de réglage de la pression de consigne et de décompression de l'enceinte.

Dans ce cas, l'appareil de cuisson comprend avantageusement un organe de régulation 7 de la pression régnant dans l'enceinte de cuisson à une valeur de consigne, le moyen de gestion de pression 6 comprenant un moyen de réglage 8 de cette valeur de consigne. Le moyen de réglage 8 en question est mobile entre une pluralité de positions (par exemple deux positions distinctes) correspondant à des valeurs de consignes respectives. Avantageusement, l'organe de régulation 7 de la pression comprend un orifice 9 de mise en communication de l'intérieur de l'enceinte avec l'extérieur et une soupape tarée 10 mobile entre une position de libération de l'orifice 9 permettant la mise en communication de l'intérieur de l'enceinte avec l'extérieur lorsque la pression dans l'enceinte excède la valeur de consigne et une position d'obturation de l'orifice 9 par la soupape 10 afin de permettre à la pression de monter ou de se maintenir audit niveau de consigne. La soupape 10 peut être réalisée de toutes manières connues de l'homme du métier. Par exemple, la soupape 10 comprend une tête (non visible aux figures) destinée à venir alternativement obturer et libérer l'orifice 9 selon le niveau de pression régnant dans l'enceinte. La tête se prolonge avantageusement par une tige, laquelle s'épanouit enfin en une queue 11 dont le diamètre est supérieur à celui de la tige. La soupape 10 est soumise en permanence à une force de rappel élastique qui la rappelle dans sa position d'obturation. Lorsque la pression excède le niveau de consigne, la soupape 10 subit sous l'effet de la pression une force de soulèvement qui excède l'effort de rappel tendant à la maintenir dans sa position d'obturation et l'écarte ainsi de sa position d'obturation pour permettre une fuite de vapeur vers l'extérieur. Avantageusement, l'organe de régulation de pression 7 comprend un corps élastique (non visible aux figures) pour tarer ladite soupape 10 et la rappeler élastiquement dans sa position d'obturation de l'orifice 9 ainsi qu'une butée coulissante 12 formant le moyen de réglage 8 de la valeur de consigne. Le corps élastique en question, formé par exemple par un ressort hélicoïdal, est avantageusement interposé entre la soupape 10 et la butée coulissante 12 de manière à être contraint entre lesdites soupape 10 et butée coulissante 12, le niveau de contrainte dépendant de la plus ou moins grande proximité entre la soupape 10 et la butée coulissante 12. Le corps élastique exerce ainsi un effort d'appui sur la butée coulissante 12 et un effort de réaction (opposé à l'effort d'appui) sur la soupape 10. Le réglage de la position de la butée coulissante 12, par coulissement de cette dernière, permet ainsi de modifier l'effort d'appui et donc l'effort de réaction correspondant, ce qui permet de régler le tarage de la soupape 10.

Le moyen de réglage 8 de la valeur de consigne constitue ainsi dans ce cas un moyen d'ajustement du tarage.

Conformément aux modes de réalisation illustrés aux figures, le moyen de gestion de pression 6 comprend également un moyen de décompression mobile entre :
- une position de décompression permettant de faire chuter la pression régnant dans l'enceinte, en ménageant une mise en communication de l'intérieur de l'enceinte avec l'extérieur,
- et une position étanche n'entraînant sensiblement pas de chute de pression dans l'enceinte, l'enceinte de cuisson restant sensiblement hermétique lorsque le moyen de décompression se trouve dans sa position étanche.

De préférence, le moyen de décompression est conçu pour atteindre sa position de décompression quel que soit le niveau de pression régnant dans l'enceinte de cuisson. En d'autres termes, le moyen de décompression permet de réaliser (en position de décompression) une fuite de vapeur continue et permanente grâce à une mise en communication forcée de l'intérieur de l'enceinte avec l'extérieur, indépendamment du niveau de pression régnant dans l'enceinte.

De préférence, et conformément aux modes de réalisation illustrés aux figures, l'organe de régulation de pression 7 forme le moyen de décompression. Dans ce cas, la butée coulissante 12 est avantageusement conçue pour entraîner la soupape 10 dans sa position de libération de l'orifice 9 lorsque ladite butée 12 est soumise à un effort de libération suffisant de même sens que l'effort d'appui exercé par le corps élastique sur la butée coulissante 12. A cette fin, la butée 12 se présente avantageusement sous la forme d'un capuchon percé en son centre de manière à être traversée par la tige de la soupape 10. Un anneau d'arrêt 13 est monté sur la tige de la soupape 10 de façon à être interposé entre la tête 11 de la soupape 10 et la surface extérieure de la butée coulissante 12. Grâce à cette disposition, la butée coulissante 12 peut entraîner en déplacement la queue 11 de la soupape 10 en exerçant une poussée sur ladite queue 11 par l'intermédiaire de l'anneau d'arrêt 13.

Avantageusement, l'organe de régulation 7 de la pression comprend un conduit 14 au sein duquel est montée à coulissement la butée coulissante 12. Le conduit 14 en question s'étend avantageusement selon la direction verticale, de façon que la butée coulissante 12 coulisse verticalement dans ledit conduit 14 vers le bas (c'est-à-dire en direction du fond de cuve) ou vers le haut (en s'éloignant du fond de cuve). La butée coulissante 12 coiffe avantageusement le ressort hélicoïdal formant le corps élastique de tarage et de rappel de la soupape 10. Ainsi, un coulissement vers le bas de la butée coulissante 12 provoque une compression du ressort de rappel et de tarage, qui permet d'augmenter le tarage de la soupape 10, tandis qu'un coulissement de la butée coulissante 12 vers le haut provoque une relaxation du ressort (et donc une diminution du tarage) puis un soulèvement de la queue 11 de la soupape 10 qui permet de séparer la tête de soupape de l'orifice 9 quel que soit le niveau de pression régnant dans l'enceinte, ce qui provoque une décompression de cette dernière.

L'appareil de cuisson comprend également un sélecteur 15 qui est déplaçable manuellement pour commander le déplacement du moyen de verrouillage / déverrouillage 2 et celui du moyen de gestion de pression 6. En d'autres termes, le sélecteur 15 est mobile et peut être déplacé à la main par l'utilisateur de façon à permettre à ce dernier de commander par l'intermédiaire du sélecteur 15 le déplacement du moyen de verrouillage / déverrouillage 2 entre ses positions de verrouillage et de déverrouillage, mais également, et de façon concomitante ou non, le déplacement du moyen de gestion de pression 6 entre ses différentes positions fonctionnelles. Le sélecteur 15 assure ainsi une double fonction puisqu'il forme un moyen de commande unique et commun du déplacement du moyen de verrouillage / déverrouillage 2 et du déplacement du moyen de gestion de pression 6. A cette fin, le sélecteur 15 comprend avantageusement au moins une manette 16 destinée à être saisie par l'utilisateur, par exemple entre le pouce et l'index, de manière à permettre à l'utilisateur de déplacer le sélecteur 15, de préférence en rotation autour de la direction verticale, c'est-à-dire dans le plan horizontal. Le sélecteur 15 est donc avantageusement rotatif.

L'appareil conforme à l'invention comprend une première pièce de transmission 17 qui est mobile relativement à un dispositif mobile constitué par le moyen de verrouillage / déverrouillage 2 ou le moyen de gestion de pression 6.

L'invention concerne donc plusieurs alternatives.

Selon une première alternative, la première pièce de transmission 17 est mobile relativement à un dispositif mobile qui est lui-même formé par le moyen de verrouillage / déverrouillage 2.

Dans un autre mode de réalisation, la pièce de transmission 17 est mobile relativement à un dispositif mobile constitué cette fois par le moyen de gestion de pression 6.

Selon encore un autre mode de réalisation, qui correspond aux variantes illustrées aux figures, l'appareil comprend d'une part une première pièce de transmission 17 mobile relativement au moyen de verrouillage / déverrouillage 2 et d'autre part une deuxième pièce de transmission 18 mobile relativement au moyen de gestion de pression 6.

La première pièce de transmission 17 est en outre conçue pour agir sur la position dudit dispositif mobile (constitué donc par le moyen de verrouillage / déverrouillage 2 ou le moyen de gestion de pression 6) en réponse à un déplacement correspondant du sélecteur 15. En d'autres termes, la première pièce de transmission 17 entraîne le déplacement du dispositif mobile (constitué, dans l'exemple illustré aux figures, par le moyen de verrouillage / déverrouillage 2) lorsque le sélecteur 15 est lui-même déplacé. La première pièce de transmission 17 est donc interposée entre le sélecteur 15 et le dispositif mobile pour transmettre au dispositif mobile l'ordre de déplacement donné par l'utilisateur par l'intermédiaire du sélecteur 15.

La première pièce de transmission 17 est également conçue pour pouvoir se déplacer pendant que le sélecteur 15 reste sensiblement immobile et/ou rester sensiblement immobile pendant que le sélecteur 15 se déplace.

L'invention concerne donc à cet égard plusieurs alternatives, savoir :
- une première alternative selon laquelle la première pièce de transmission 17 est capable de se déplacer pendant que le sélecteur 15 reste sensiblement immobile,
- une deuxième alternative selon laquelle la première pièce de transmission 17 est capable de rester sensiblement immobile pendant que le sélecteur 15 se déplace,
- et une troisième alternative selon laquelle la première pièce de transmission 17 peut d'une part se déplacer pendant que le sélecteur 15 reste sensiblement immobile, et d'autre part rester sensiblement immobile pendant que le sélecteur 15 se déplace.

Dans le mode de réalisation illustré aux figures, la première pièce de transmission 17 met en oeuvre la troisième alternative précitée, c'est-à-dire qu'elle est capable d'une part de se déplacer selon une première course prédéterminée alors que le sélecteur 15 reste sensiblement immobile dans une position prédéterminée, et d'autre part de rester sensiblement immobile pendant que le sélecteur 15 se déplace selon une course prédéterminée entre au moins deux positions prédéterminées.

Ainsi, l'invention concerne un appareil dans lequel la mobilité de la première pièce de transmission 17 et celle du sélecteur 15 sont au moins partiellement découplées, ce qui autorise des cinématiques originales pour le dispositif mobile (constituées par le moyen de verrouillage / déverrouillage 2 ou le moyen de gestion de pression 6) conduisant à un fonctionnement particulièrement intuitif, ergonomique et efficace de l'appareil, sans compliquer la conception de ce dernier.

Dans le cas où l'appareil comprend, comme illustré aux figures, d'une part une première pièce de transmission 17 mobile relativement au moyen de verrouillage / déverrouillage 2 et d'autre part une deuxième pièce de transmission 18 mobile relativement au moyen de gestion de pression 6, ladite deuxième pièce de transmission 18 est également conçue pour agir sur la position du moyen de gestion de pression 6 en réponse à un déplacement correspondant du sélecteur 15. En d'autres termes, la deuxième pièce de transmission 18 est interposée entre le sélecteur 15 et le moyen de gestion de pression 6 pour transmettre à ce dernier un ordre communiqué par l'utilisateur par l'intermédiaire du sélecteur 15 en vue d'agir sur le niveau de pression régnant dans l'enceinte (par exemple pour faire chuter le niveau de pression et/ou l'ajuster à un niveau de consigne prédéterminé). Dans ce cas, la deuxième pièce de transmission 18 est-elle aussi conçue pour pouvoir se déplacer pendant que le sélecteur 15 reste sensiblement immobile et/ou rester sensiblement immobile pendant que le sélecteur 15 se déplace.

Ainsi, dans les modes de réalisation préférentiels illustrés aux figures, l'appareil de cuisson d'aliments sous pression comprend :
- une première pièce de transmission 17 mobile relativement au moyen de verrouillage / déverrouillage 2, ladite première pièce de transmission 17 étant conçue pour agir sur la position dudit moyen de verrouillage / déverrouillage 2 en réponse à un déplacement correspondant du sélecteur 15, ladite première pièce de transmission 17 étant en outre conçue pour pouvoir se déplacer pendant que le sélecteur 15 reste sensiblement immobile et rester sensiblement immobile pendant que le sélecteur 15 se déplace ;
- une deuxième pièce de transmission 18 mobile relativement au moyen de gestion de pression 6, ladite deuxième pièce de transmission 18 étant conçue pour agir sur la position dudit moyen de gestion de pression 6 en réponse à un déplacement correspondant du sélecteur 15, ladite deuxième pièce de transmission 18 étant en outre conçue pour pouvoir se déplacer pendant que le sélecteur 15 reste sensiblement immobile et/ou rester sensiblement immobile pendant que le sélecteur 15 se déplace.

Plus précisément, les modes de réalisation illustrés aux figures prévoient que :
- la première pièce de transmission 17 (mobile relativement au moyen de verrouillage / déverrouillage 2) est conçue pour pouvoir se déplacer pendant que le sélecteur 15 reste sensiblement immobile et rester sensiblement immobile pendant que le sélecteur 15 se déplace ;
- la deuxième pièce de transmission 18 est conçue pour pouvoir rester sensiblement immobile pendant que le sélecteur 15 se déplace, mais elle ne peut se déplacer sans que le sélecteur 15 ne se déplace lui-même.

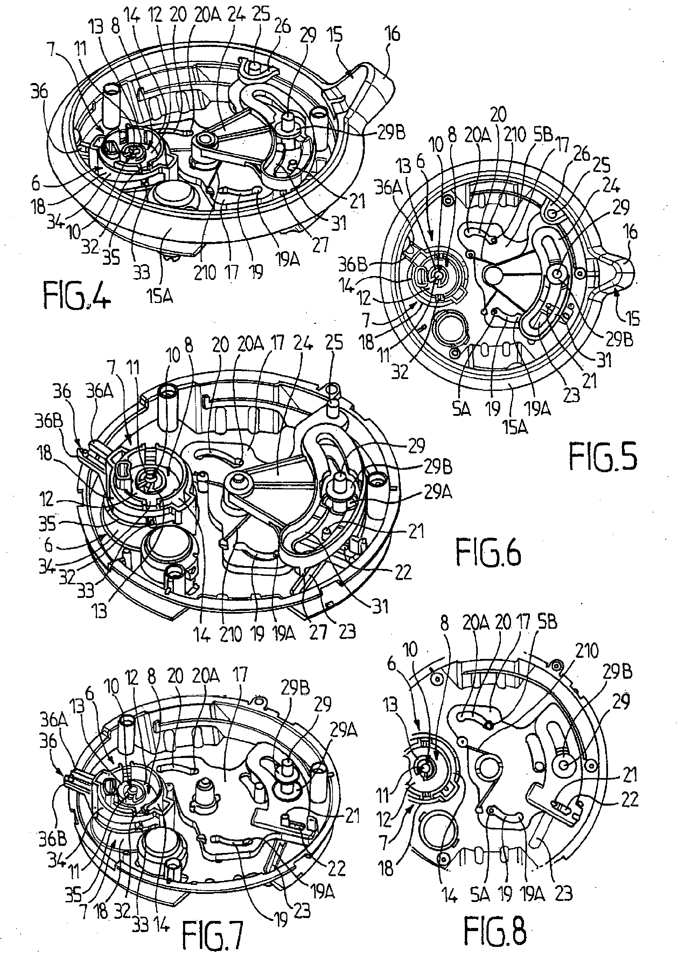

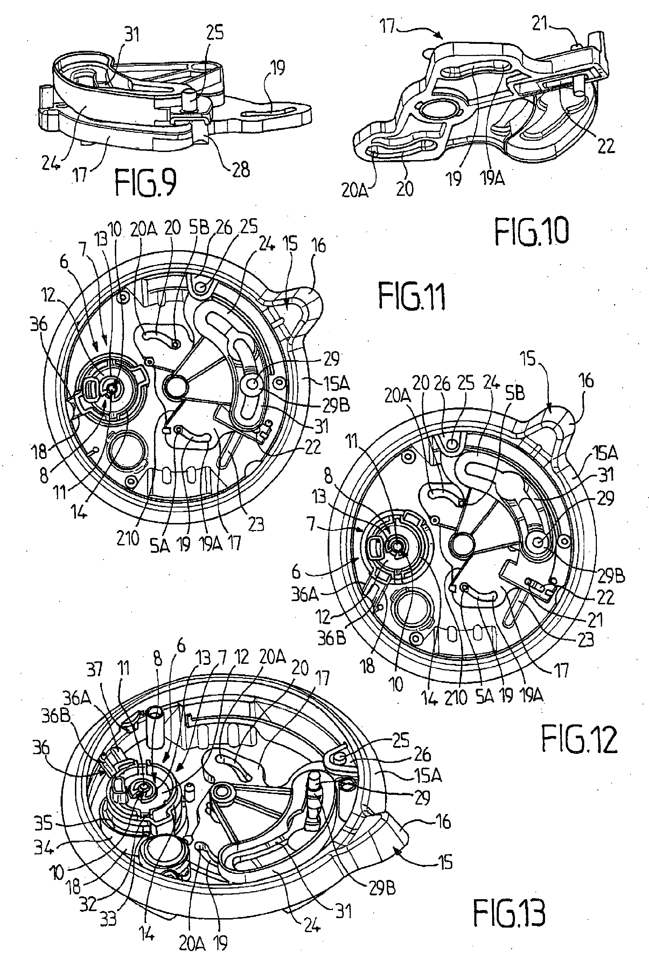

Avantageusement, et conformément aux modes de réalisation illustrés aux figures, le sélecteur 15 et la première pièce de transmission 17 coopèrent pour que la position instantanée de la première pièce de transmission 17 varie en fonction de la position instantanée du sélecteur 15 selon :
- une première loi lorsque le sélecteur 15 est déplacé d'une première position prédéterminée (illustrée par exemple aux figures 4 à 8) vers une deuxième position prédéterminée (illustrée par exemple à la figure 12),
- une deuxième loi, différente de la première loi, lorsque le sélecteur 15 est déplacé de ladite deuxième position vers ladite première position.

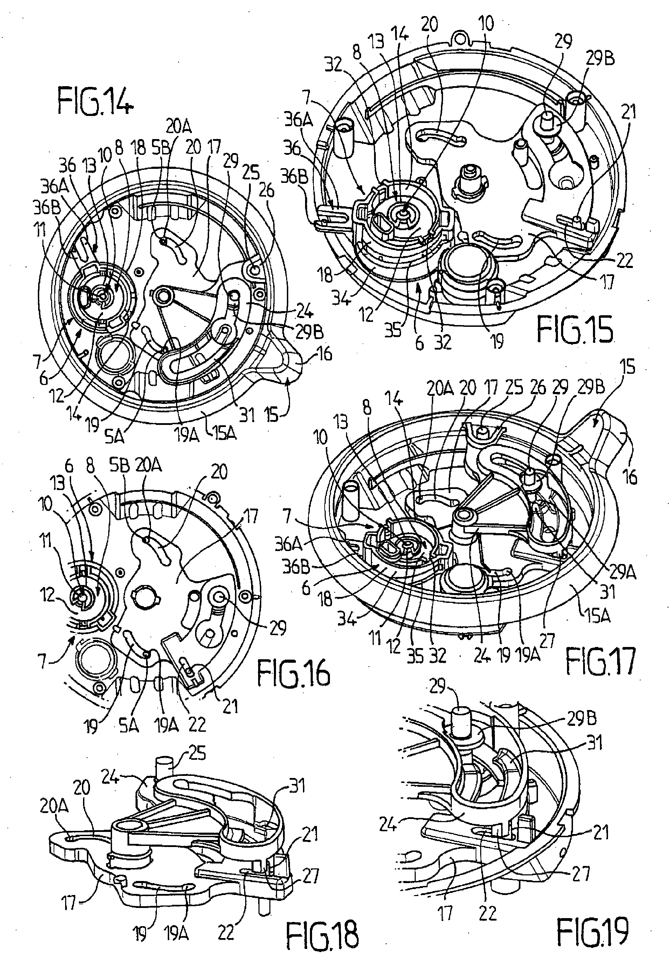

Par exemple, dans les modes de réalisation illustrés aux figures, le sélecteur 15 entraîne un déplacement progressif et concomitant de la première pièce de transmission 17 lorsqu'il se déplace de sa première position prédéterminée (illustrée aux figures 4 à 8) vers sa deuxième position prédéterminée (illustrée aux figures 14 à 16) tandis que lorsque le sélecteur 15 se déplace de sa deuxième position vers sa première position, la première pièce de transmission 17 subit un rappel élastique brusque. Une telle disposition permet par exemple de différencier la cinématique de verrouillage de la cinématique de déverrouillage, ce qui présente un intérêt en matière de confort et de sécurité d'utilisation.

Avantageusement, et comme illustré aux figures, la première pièce de transmission 17 est rotative. De préférence, la première pièce de transmission 17 est montée à rotation selon la direction verticale, de même que le sélecteur 15, de façon que le sélecteur 15 et la première pièce de transmission 17 se déplacent en rotation dans des plans sensiblement parallèles.

Comme illustré aux figures, chaque pion d'entraînement 5A, 5B du moyen de verrouillage / déverrouillage 2 coopèrent avantageusement avec la première pièce de transmission 17 pour entraîner le déplacement du pion 5A, 5B en réponse à un déplacement correspondant de la première pièce de transmission 17. A cet effet, la première pièce de transmission 17 est avantageusement pourvue d'au moins une rampe 19 coopérant avec le pion d'entraînement 5A, 5B pour entraîner le moyen de verrouillage / déverrouillage 2 en position de déverrouillage (illustrée aux figures 1 et 2) en réponse à un déplacement correspondant de la première pièce de transmission 17. Dans l'exemple des figures 1 à 19, la première pièce de transmission 17 comprend deux rampes 19, 20 coopérant respectivement avec les pions d'entraînement 5A, 5B pour commander le déplacement en translation radiale de ces derniers.

Par exemple, la première pièce de transmission 17 présente sensiblement une forme de plaque, les rampes 19, 20 étant formées par des lumières courbes ménagées à travers la plaque et dans lesquels sont engagés respectivement les pions d'entraînement 5A, 5B. Ainsi, sous l'effet du mouvement de rotation de la première pièce de transmission 17, les lumières formant les rampes 19, 20 vont exercer un effort de rapprochement ou d'écartement mutuel des pions d'entraînement 5A, 5B, lesquels sont guidés à coulissement radial sur le couvercle 1.

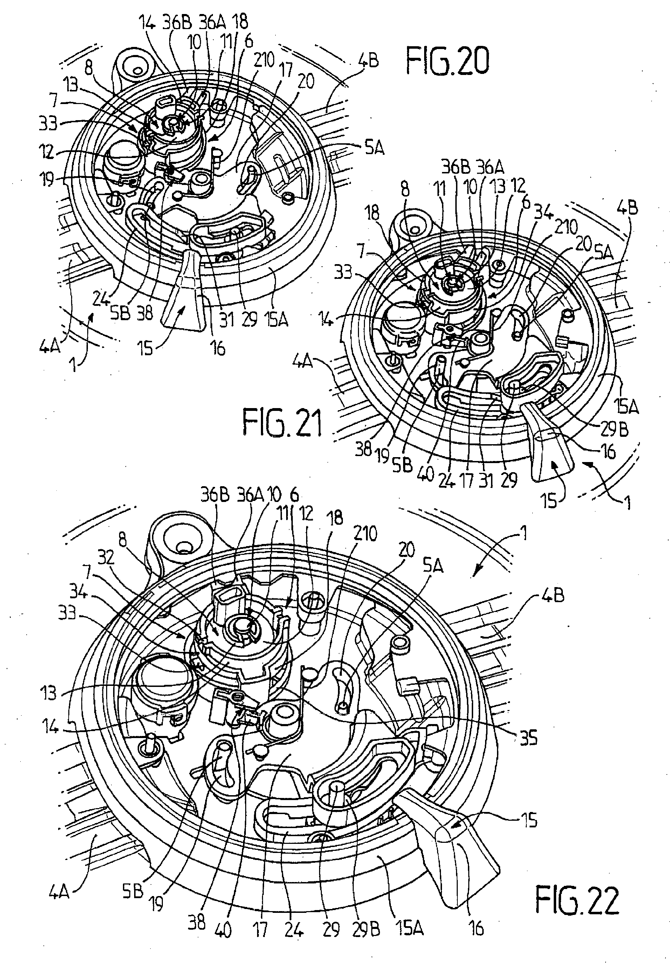

Dans les modes de réalisation illustrés aux figures, la première pièce de transmission 17 est avantageusement montée mobile entre une première position correspondant au verrouillage et une deuxième position correspondant au déverrouillage, ladite première pièce de transmission 17 étant soumise à un rappel élastique activable / désactivable vers sa première position. La première position en question est avantageusement la position de verrouillage et décompression illustrée notamment aux figures 8 et 21. Dans cette première position, la première pièce de transmission 17 maintient le moyen de verrouillage / déverrouillage en position de verrouillage (en agissant sur les pions d'entrainement 5A, 5B), ou du moins ne s'oppose pas au rappel élastique du moyen de verrouillage / déverrouillage en position de verrouillage. La deuxième position de la première pièce de transmission 17 correspond quant à elle à la position de déverrouillage illustrée notamment aux figures 13 et 14. Dans cette deuxième position, la première pièce de transmission 17 maintient les pions d'entraînement 5A, 5B selon un écartement mutuel suffisant pour placer le moyen de verrouillage / déverrouillage 2 en position de déverrouillage. Le rappel élastique de la première pièce de transmission 17 vers sa première position est avantageusement obtenu à l'aide d'au moins un ressort 210, et par exemple un ressort de torsion qui exerce en permanence sur la première pièce de transmission 17 un effort de rappel élastique. Avantageusement, la force de rappel qui tend à rappeler le moyen de verrouillage / déverrouillage 2 en position de verrouillage contribue également à rappeler la première pièce de transmission 17 dans sa première position, par l'intermédiaire des pions d'entraînement 5A, 5B qui exercent sur les rampes correspondantes 19, 20 un effort tendant à rappeler la première pièce de transmission 17 vers sa première position.

Conformément aux modes de réalisation illustrés aux figures, le sélecteur 15 est mobile entre au moins une première position correspondant au verrouillage (illustrée par exemple aux figures 4, 5 et 21) et une deuxième position correspondant au déverrouillage (illustrée par exemple aux figures 13, 14 et 20). La première position en question correspond de préférence à une configuration de verrouillage et décompression, dans laquelle le moyen de verrouillage / déverrouillage 2 est en position de verrouillage, tandis que l'intérieur de l'enceinte est mis en communication avec l'extérieur pour permettre une chute de la pression régnant dans l'enceinte.

De préférence, le sélecteur 15 est conçu pour activer le rappel élastique de la première pièce de transmission 17 lorsque ledit sélecteur 15 est déplacé de sa deuxième position vers sa première position, autorisant ainsi le rappel élastique de la première pièce de transmission 17 de sa deuxième position vers sa première position. A cette fin, le moyen de verrouillage / déverrouillage 2 coopère avantageusement avec la première pièce de transmission 17 pour que la force de rappel auquel est soumis le moyen de verrouillage / déverrouillage 2 d'une part contribue à maintenir la première pièce de transmission 17 dans sa deuxième position tant que la première pièce de transmission 17 se trouve dans sa deuxième position et d'autre part ne s'oppose pas, ou même contribue, au rappel élastique de la première pièce de transmission 17 vers sa première position dès que la première pièce de transmission 17 s'est déplacée d'au moins une course prédéterminée de sa deuxième position vers sa première position. Dans le mode de réalisation des figures 1 à 19, cette mesure technique est mise en oeuvre de la façon suivante. Chaque rampe 19, 20 est pourvue à l'une de ses extrémités (occupée par le pion d'entraînement correspondant 5A, 5B en position de déverrouillage) d'un logement 19A, 20A conformé pour que la force de rappel exercée sur le moyen de verrouillage / déverrouillage 2 ait tendance à maintenir chacun des pions d'entraînement 5A, 5B dans son logement respectif 19A, 20A selon une position d'équilibre instable. Lorsque la première pièce de transmission 17 se déplace d'une course prédéterminée permettant de forcer chaque pion 5A, 5B à quitter son logement respectif 19A, 20A en surmontant la force de rappel du moyen de verrouillage / déverrouillage 2, chacun desdits pions d'entraînement 5A, 5B se retrouve alors dans une portion de la rampe correspondante 19, 20 conformée pour favoriser le rapprochement mutuel des pions d'entraînement 5A, 5B sous l'effet d'une part du rappel élastique auquel est soumis la première pièce de transmission 17, et d'autre part de la force de rappel à laquelle est soumis le moyen de verrouillage / déverrouillage 2. En d'autres termes, dès que les pions d'entraînement 5A, 5B ont quitté leur logement 19A, 20A, la première pièce de transmission 17 est brutalement soumise à un rappel élastique qui la ramène vers sa première position. Le rappel élastique de la première pièce de transmission 17 est ainsi désactivé (car inhibé par la conformation des logements 19A, 20A) lorsque les pions d'entraînement 5A, 5B se trouvent dans leur logement 19A, 20A, et activé dès que lesdits pions d'entraînement 5A, 5B quittent leur logement 19A, 20A.

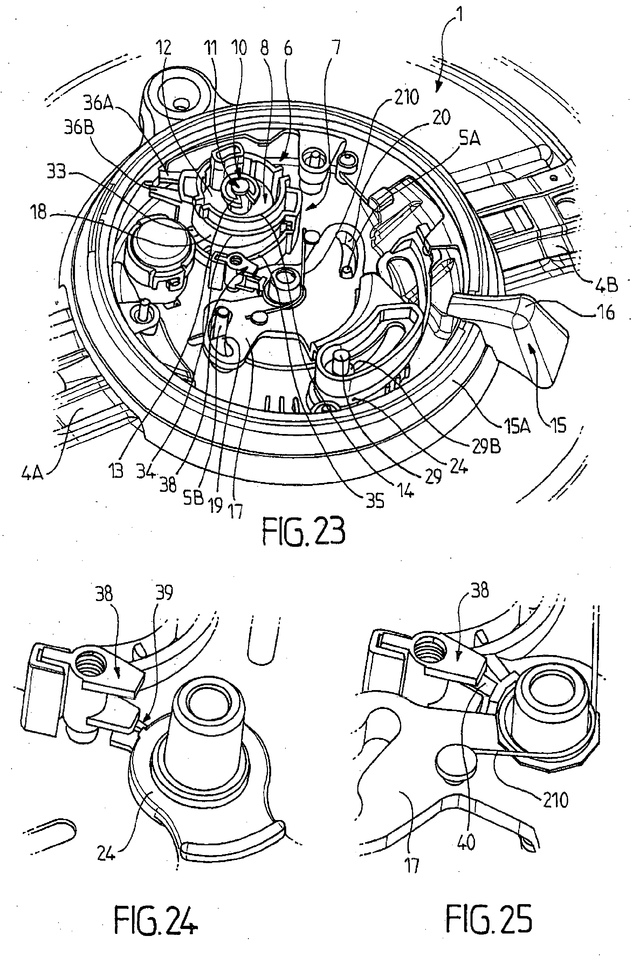

Dans le mode de réalisation des figures 20 à 25, il est prévu, en lieu et place d'une conformation spécifique des logements 19A, 20A, une pièce d'arrêt 38 montée à coulissement vertical entre une position basse de rappel élastique et une position haute. Lorsque l'utilisateur déplace le sélecteur 15 de la position de déverrouillage illustrée à la figure 20 à la position de verrouillage de la figure 21, la pièce de commande 24 vient soulever (grâce à une rampe 39), à l'approche de la position de verrouillage, la pièce d'arrêt 38 jusqu'à sa position haute. Ce passage de la pièce d'arrêt 38 de sa position basse à sa position haute fait que la pièce d'arrêt 38 n'interfère plus avec la trajectoire de la première pièce de transmission 17, et plus précisément avec la trajectoire d'une butée de blocage 40 solidaire de ladite pièce de transmission 17 et qui vient en butée de blocage contre la pièce d'arrêt 38 dans la configuration illustrée à la figure 20. La pièce de transmission 17 peut ainsi être librement rappelée dans sa première position par le ressort 210, et entraîner à cette occasion le moyen de verrouillage / déverrouillage 2 en position de verrouillage.

Avantageusement, et conformément aux modes de réalisation des figures 1 à 19, l'appareil comprend également un ergot d'entraînement 21 monté mobile entre une position active (illustrée aux figures 10 et 15 à 19) et une position inactive (illustrée par exemple aux figures 4 à 8). L'ergot d'entraînement 21 est conçu pour se trouver dans sa position inactive tant que la première pièce de transmission 17 n'est pas dans sa deuxième position définie précédemment, et pour se trouver dans sa position active lorsque la première pièce de transmission 17 se trouve dans sa deuxième position, le sélecteur 15 étant conçu pour coopérer avec l'ergot d'entraînement 21 en position active de façon à déplacer la première pièce de transmission 17 d'au moins ladite course prédéterminée évoquée précédemment (et permettant l'activation du rappel élastique de la première pièce de transmission 17) lorsque le sélecteur 15 se déplace de sa deuxième position vers sa première position. En d'autres termes, l'ergot d'entraînement 21 est conçu pour pouvoir, lorsqu'il est en position active, être entraîné par le sélecteur 15 lorsque ce dernier se déplace de sa deuxième position vers sa première position, l'ergot d'entraînement 21 entraînant lui-même en retour le déplacement puis le rappel de la première pièce de transmission 17 de sa deuxième position vers sa première position. Avantageusement, l'ergot d'entraînement 21 coopère avec la première pièce de transmission 17 pour que le déplacement de la première pièce de transmission 17 de sa première position dans sa deuxième position entraîne le passage de l'ergot d'entraînement 21 de sa position inactive dans sa position active. A cet effet, l'ergot d'entraînement 21 est de préférence monté à coulissement sur la première pièce de transmission 17. Par exemple, l'ergot d'entraînement 21 coulisse avantageusement dans une lumière 22 rectiligne ménagée dans la première pièce de transmission 17, tout en étant guidé concomitamment par une rainure 23 solidaire du couvercle 1 (et avantageusement ménagé dans une platine qui forme le fond du module), et donc par rapport à laquelle la première pièce de transmission 17 est mobile. Ce double guidage de l'ergot d'entraînement 21 par la lumière 22 et la rainure 23 permet d'opérer un déplacement en translation radiale de l'ergot d'entraînement 21, sous l'effet de la rotation de la première pièce de transmission 17, entre une position rétractée (illustrée par exemple à la figure 12) dans laquelle la distance entre l'ergot d'entraînement 21 et le centre de rotation de la première pièce d'entraînement 17 est minimale, et une position expansée (illustrée par exemple à la figure 15) dans laquelle la distance entre l'ergot d'entraînement 21 et le centre de rotation de la première pièce de transmission 17 est maximale, lesdites positions rétractée et expansée correspondant respectivement aux positions désactivée et activée de l'ergot de transmission 21. Ainsi, l'ergot d'entraînement 21 est conçu pour se trouver en position activée lorsque la première pièce d'entraînement se trouve elle-même dans sa deuxième position, et en position désactivée lorsque la première pièce de transmission 17 quitte sa deuxième position, par exemple en étant rappelée dans sa première position.

La coopération du sélecteur 15 avec l'ergot d'entraînement 21 pour déplacer la première pièce de transmission 17 d'au moins ladite course prédéterminée évoquée précédemment peut être effectuée de manière directe ou indirecte. Dans le mode de réalisation des figures 1 à 19, le sélecteur 15 coopère indirectement avec l'ergot d'entraînement 21, par l'intermédiaire d'une pièce de commande 24. Ladite pièce de commande 24 est avantageusement interposée entre le sélecteur 15 et la première pièce de transmission 17 pour agir sur la position de cette dernière en réponse à un déplacement correspondant du sélecteur 15. La pièce de commande 24 est avantageusement solidaire du sélecteur 15, c'est-à-dire qu'elle est montée fixe relativement au sélecteur 15. En revanche, la pièce de commande 24 est avantageusement mobile relativement à la première pièce de transmission 17, et est conçue pour coopérer mécaniquement avec cette dernière de façon à en commander le déplacement. A cet effet, la pièce de commande 24 est par exemple pourvue d'un plot de fixation 25, tandis que le sélecteur 15 comprend une couronne 15A rotative à laquelle est fixée la manette 16, cette dernière venant avantageusement de matière avec la couronne 15A. Ladite couronne 15A est avantageusement pourvue d'un élément femelle 26 dans lequel est enfilé le plot de fixation 25, de telle sorte que la manette 16 puisse entraîner en déplacement, par l'intermédiaire de la couronne 15A et de l'élément femelle 26, la pièce de commande 24 en rotation autour de l'axe vertical.

Il est également envisageable, comme dans le mode de réalisation des figures 20 à 25, que la couronne 15A porte un moyen de fixation mâle, tandis que la pièce de commande 24 porte un moyen de fixation femelle, l'essentiel étant que le sélecteur 15 puisse être solidarisé d'une manière ou d'une autre à la pièce de commande 24.

Avantageusement, la première pièce de transmission 17, la pièce de commande 24 et le sélecteur 15 sont tous montés à rotation autour d'un même axe de rotation vertical. Dans le mode de réalisation des figures 1 à 19, la première pièce de transmission 17 pivote autour de son axe de rotation dans un premier plan horizontal situé en deçà du second plan horizontal dans lequel pivote la pièce de commande 24. Au contraire, dans le mode de réalisation des figures 20 à 25, la première pièce de transmission 17 pivote autour de son axe de rotation dans un premier plan horizontal situé au-dessus du second plan horizontal dans lequel pivote la pièce de commande 24.

Conformément aux modes de réalisation des figures 1 à 19, la pièce de commande 24 est avantageusement pourvue d'un crochet d'entraînement 27 qui est conçu pour venir exercer une poussée dans le plan horizontal sur l'ergot d'entraînement 21 lorsque le sélecteur 15 se déplace de sa deuxième position (correspondant au déverrouillage) vers sa première position (correspondant au verrouillage) et que l'ergot d'entraînement 21 se trouve en position active. Le crochet d'entraînement 27 pousse ainsi sur l'ergot d'entraînement 21, ce qui a pour effet d'entraîner en rotation la première pièce de transmission 17 selon une course suffisante pour permettre aux pions d'entraînement 5A, 5B de sortir de leur logement 19A, 20A, ce qui entraîne alors le rappel élastique brusque de la première pièce de transmission 17 dans sa première position, ce rappel élastique brusque correspondant au retour du moyen de verrouillage / déverrouillage 2 en position de verrouillage. Le rappel élastique de la première pièce de transmission 17 s'accompagne du déplacement de l'ergot d'entraînement 21 de sa position active vers sa position inactive. En position inactive, l'ergot d'entraînement 21 n'interfère pas avec la trajectoire du crochet d'entraînement 27 lorsque le sélecteur se déplace de sa première position (de verrouillage) vers sa deuxième position (de déverrouillage).

La pièce de commande 24 est par ailleurs avantageusement pourvue d'un plot d'entraînement 28 qui est attaché à la pièce de commande 24 de façon à pouvoir entraîner la première pièce de transmission 17 de sa première position (correspondant au verrouillage) vers et dans sa deuxième position (correspondant au déverrouillage) lorsque le sélecteur 15 est lui-même déplacé de sa première position (correspondant au verrouillage) vers et dans sa deuxième position (correspondant au déverrouillage).

Avantageusement, l'appareil conforme à l'invention comprend un moyen de sécurité à l'ouverture 29 sensible à la pression et/ou à la température régnant dans l'enceinte, ledit moyen de sécurité à l'ouverture 29 étant conçu pour adopter, tant que la pression et/ou la température régnant dans l'enceinte est supérieure à une valeur prédéterminée de sécurité (par exemple excédant la pression atmosphérique d'une valeur comprise entre au moins 1 et 4 kPa pour la pression), une position de blocage (illustrée aux figures 4 à 8) dans laquelle il interfère avec la trajectoire de déplacement de la première pièce de transmission 17 pour empêcher le déverrouillage. Le moyen de sécurité à l'ouverture 29 est avantageusement sensible à la pression régnant dans l'enceinte, et est monté à coulissement vertical sur le couvercle 1 entre une position basse de fuite dans laquelle le moyen de sécurité à l'ouverture 29 autorise une fuite de vapeur de l'intérieur de l'enceinte vers l'extérieur par l'intermédiaire d'un orifice 30 empêchant ainsi la montée en pression de l'enceinte et une position haute (correspondant à la position de blocage) dans laquelle le moyen de sécurité à l'ouverture 29 ferme hermétiquement l'orifice 30 de façon à permettre la montée en pression de l'enceinte tout en interférant avec la trajectoire de déplacement de la première pièce de transmission 17 pour empêcher le déverrouillage. A cette fin, le moyen de sécurité à l'ouverture 29 est pourvu d'une première collerette 29A qui coopère avec une lumière ménagée à travers la première pièce de transmission 17 de la façon suivante :
- tant que la première pièce de transmission 17 se trouve dans sa deuxième position (correspondant au déverrouillage), la première collerette 29A vient en butée contre la première pièce de transmission 17 et empêche ainsi le moyen de sécurité à l'ouverture 29 d'atteindre sa position de blocage ; cette dernière ne peut être atteinte que lorsque la première pièce de transmission 17 se trouve en position de verrouillage, auquel cas le moyen de sécurité à l'ouverture 29 se trouve en regard d'une portion agrandie de la lumière en question qui autorise le passage de la première collerette 29A, permettant ainsi au moyen de sécurité à l'ouverture 29 d'atteindre sa position de blocage.
- une fois en position de blocage, la première collerette 29A est capturée dans la lumière ménagée dans la première pièce de transmission 17 (comme illustrée à la figure 7) et interdit de ce fait tout mouvement de la première pièce de transmission 17, en particulier vers sa deuxième position (correspondant au déverrouillage).

Le moyen de sécurité à l'ouverture 29 assure donc également, dans les modes de réalisation avantageux illustrés aux figures, une fonction de sécurité à la mauvaise fermeture en empêchant le moyen de sécurité à l'ouverture 29 d'atteindre sa position d'obturation de l'orifice 30 tant que la première pièce de transmission 17 ne se trouve pas dans une position adaptée correspondant au verrouillage du couvercle 1 relativement à la cuve.

Avantageusement, le moyen de sécurité à l'ouverture 29 est conçu pour interférer, en position de blocage, avec la trajectoire de déplacement de chacune desdites première pièce de transmission 17 et pièce de commande 24. Dans ce cas, qui constitue d'ailleurs une invention susceptible d'être protégée en tant que telle, indépendamment des autres aspects techniques décrits ici, le moyen de sécurité à l'ouverture 29 coopère avec deux pièces mobiles l'une par rapport à l'autre (savoir la première pièce de transmission 17 et la pièce de commande 24) lesdites pièces étant interposées entre le sélecteur 15 et le moyen de verrouillage / déverrouillage 2 pour agir sur la position du moyen de verrouillage / déverrouillage 2 en réponse à un actionnement du sélecteur 15 par l'utilisateur.

De préférence, le moyen de sécurité à l'ouverture 29 présente une deuxième collerette 29B qui coopère avec la pièce de commande 24 de la même façon que la première collerette 29A coopère avec la première pièce de transmission 17.

Le moyen de sécurité à l'ouverture 29, qui est avantageusement constitué en l'espèce par un doigt de sécurité mobile verticalement et sensible à la pression, coopère donc avec chacune desdites première pièce de transmission 17 et pièce de commande 24 pour bloquer le déplacement de ces dernières indépendamment l'une de l'autre, ce qui procure une double sécurité d'utilisation. En effet, si pour une raison ou pour une autre la liaison mécanique de blocage entre le moyen de sécurité à l'ouverture 29 et la première pièce de transmission 17 était rompue (à la suite de la casse d'une pièce par exemple), l'utilisateur ne serait malgré tout pas en mesure de procéder au déverrouillage du couvercle tant que le moyen de sécurité à l'ouverture 29 est en position de blocage dans la mesure où ledit moyen de sécurité à l'ouverture 29 continuerait à coopérer avec la pièce de commande 24 pour bloquer le déplacement de cette dernière. Bien entendu, le même raisonnement vaut si la liaison mécanique de blocage qui est interrompue est celle existant entre la pièce de commande 24 et le moyen de sécurité à l'ouverture 29.

Avantageusement, la pièce de commande 24 est conçue pour entraîner le moyen de sécurité à l'ouverture 29 en position de blocage lorsque le sélecteur 15 adopte au moins une position prédéterminée correspondante, correspondant par exemple à la configuration de verrouillage étanche avec régulation de pression à une première valeur de consigne. A cette fin, la pièce de commande 17 comprend avantageusement une rampe 31 conçue pour exercer une poussée verticale ascendante sur la deuxième collerette 29B, en vue de soulever le moyen de sécurité à l'ouverture 29 et de surmonter ainsi son poids pour le placer en position de blocage et l'empêcher de redescendre par gravité dans sa position basse de fuite. Une telle disposition permet d'accélérer la montée en pression, en évitant d'attendre que le moyen de sécurité à l'ouverture 29 adopte sa position de blocage de manière naturelle, sous le seul effet de la montée en pression.

Conformément aux modes de réalisation illustrés aux figures, le sélecteur 15 est avantageusement conçu pour commander le déplacement du moyen de réglage 8 de la valeur de consigne de l'organe de régulation 7 de la pression régnant dans l'enceinte. Le sélecteur 15 est en outre avantageusement conçu pour commander, outre le réglage du niveau de consigne, la décompression. A cet effet, le sélecteur 15 est avantageusement conçu d'une part pour adopter au moins une position prédéterminée dans laquelle il force la soupape 10 tarée à adopter une position de libération de l'orifice 9 permettant la mise en communication de l'intérieur de l'enceinte avec l'extérieur, et d'autre part pour déplacer le moyen de réglage 8 de la valeur de consigne afin de modifier le niveau de pression de consigne. Ainsi, de manière particulièrement avantageuse, le sélecteur 15 est capable d'exercer sur la butée coulissante 12 un effort de réglage suffisant pour faire coulisser la butée 12 et ajuster ainsi le tarage. En outre, le sélecteur 15 est avantageusement conçu pour adopter au moins une position prédéterminée (illustrée par exemple aux figures 4 à 6 et 13) dans laquelle il exerce sur la butée coulissante 12 l'effort de libération évoqué précédemment, afin d'entraîner la décompression.

Le sélecteur 15 permet ainsi de commander le verrouillage / déverrouillage, la décompression et le réglage du tarage de la soupape de régulation.

Pour cela, conformément aux modes de réalisation illustrés aux figures, le conduit 14 (au sein duquel est montée à coulissement la butée coulissante 12) est pourvu d'au moins une fente de guidage 32 tandis que la butée coulissante 12 est pourvue d'un axe 33 monté à coulissement (de préférence vertical) dans la fente de guidage 32 de façon à faire saillie de la surface extérieure du conduit 14 (comme illustré aux figures). L'organe de régulation 7 de la pression comprend en outre une bague de commande 34 pourvue d'une rampe de commande 35, ladite bague de commande 34 étant enfilée sur le conduit 14 de façon à pouvoir tourner autour du conduit 14 et ainsi commander le déplacement (axial) de l'axe 33 par rotation de la rampe de commande 35.

Afin de pouvoir être elle-même entraînée en rotation autour du conduit 14, la bague de commande 34 comprend avantageusement une fourche 36 à deux branches 36A, 36B, tandis que le sélecteur 15 comprend un téton 37 qui est conçu pour s'interposer entre lesdites branches 36A, 36B uniquement lorsque le sélecteur 15 parcourt une fraction prédéterminée de sa course totale, la coopération du téton 37 et de la fourche 36 permettant de commander le déplacement de la bague de commande 34 (et donc le tarage et/ou la décompression) par le sélecteur 15. Grâce notamment à cette caractéristique, il n'est pas nécessaire de recourir à des pièces de grandes dimensions, fragilisées par de nombreuses lumières de passage, pour transmettre le mouvement du sélecteur 15 au moyen de gestion de pression 6 et/ou au moyen de verrouillage / déverrouillage 2.

Avantageusement, le sélecteur 15 est d'ailleurs également conçu pour se déplacer selon une course totale prédéterminée, et n'être mécaniquement relié à la première pièce de transmission 15 que sur une fraction correspondante de ladite course. Ainsi, dans les modes de réalisation particulièrement avantageux illustrés aux figures, le sélecteur 15 n'est mécaniquement relié à la première pièce de transmission 17 que sur une première fraction de sa course totale, et n'est mécaniquement relié à la bague de commande 34 que sur une deuxième fraction de ladite course totale, lesdites première et deuxième fractions étant de préférence distinctes.

Dans les modes de réalisation particulièrement avantageux illustrés aux figures, la deuxième pièce de transmission 18 est ainsi avantageusement constituée par la bague de commande 34 et sa fourche 36.

La description qui précède concerne plus spécifiquement un appareil de cuisson dans lequel le dispositif mobile par rapport auquel la première pièce de transmission 17 est mobile est constitué par le moyen de verrouillage / déverrouillage 2, l'appareil de cuisson en question comprenant en outre une deuxième pièce de transmission 18 constituée de préférence par la bague de commande 34.

Il est cependant tout à fait envisageable, selon un mode de réalisation non illustré, que le dispositif mobile soit constitué par le moyen de gestion de pression 6, la première pièce de transmission comprenant alors dans ce cas ladite bague de commande 34.

Avantageusement, le moyen de gestion de pression 6, le sélecteur 15, la première pièce de transmission 17, la pièce de commande 24 et la deuxième pièce de transmission 18, ainsi que, de manière générale, tous les éléments de commande soumis au sélecteur 15, sont montés dans un sous-ensemble unitaire constituant un module destiné à être rapporté et fixé, de préférence de manière amovible, sur le couvercle 1.

Le fonctionnement de la variante de réalisation des figures 1 à 19 va maintenant être décrit dans ce qui suit.

Le module de commande se trouve tout d'abord dans une configuration de verrouillage et décompression (illustrée à la figure 4) dans laquelle le moyen de verrouillage / déverrouillage 2 est en position de verrouillage tandis que la bague de commande 34 se trouve dans une position correspondant à la décompression de l'enceinte. A cet instant, le sélecteur 15 se trouve dans sa première position. En déplaçant le sélecteur 15 dans le sens antihoraire (par rapport au référentiel des figures), ledit sélecteur 15 va entraîner en rotation, par coopération du téton 37 et de la fourche 36, la bague de commande 34 de manière à ce que cette dernière exerce une poussée descendante sur la butée coulissante 12 jusqu'à atteindre un premier niveau de consigne prédéterminé.

Durant la course opérée par la pièce de commande 24 entre la configuration illustrée à la figure 4 et celle de la figure 11 correspondant à une régulation de pression à une première valeur de consigne, la pièce de commande 24 n'interagit pas avec la première pièce de transmission 17, c'est à dire que la pièce de transmission 17 et la pièce de commande 24 ne sont pas liées mécaniquement. En revanche, la pièce de commande 24 entraîne avantageusement vers le haut (i.e. en position de blocage) le moyen de sécurité à l'ouverture 29.

Il est ainsi possible à l'utilisateur de tourner encore le sélecteur 15 dans le sens antihoraire jusqu'à atteindre une autre position de verrouillage étanche avec régulation de pression à une deuxième valeur de consigne, illustrée à la figure 12. La course du sélecteur 15 de la position illustrée à la figure 11 jusqu'à celle illustrée à la figure 12 entraîne une rotation correspondante de la pièce de commande 24, qui repousse la fourche 36 de manière à contraindre encore plus la butée coulissante 12 et atteindre ainsi un niveau de tarage supérieur à celui de la figure 11. Durant la course du sélecteur 15 de sa position illustrée à la figure 11 à celle illustrée à la figure 12, le sélecteur 15 n'interagit pas avec la première pièce de transmission 17, aucune liaison mécanique ne s'établissant entre la pièce de commande 24 et la première pièce de transmission 17. Afin d'effectuer le déverrouillage de l'appareil, l'utilisateur doit procéder, à partir de la configuration illustrée à la figure 12, à une rotation en sens horaire du sélecteur 15 jusqu'à la position de verrouillage et décompression de la figure 4. Dans la configuration de la figure 4, le sélecteur 15 agit sur la soupape tarée 10 pour la forcer à adopter sa position de décompression. Lorsque la configuration de la figure 4 est atteinte, le moyen de sécurité à l'ouverture 29 est en outre maintenu en position haute de blocage sous le seul effet de la pression et empêche tout déplacement supplémentaire du sélecteur 15 en sens horaire tant que la pression régnant dans l'enceinte n'a pas suffisamment baissé pour autoriser le retour du moyen de sécurité à l'ouverture 29 dans sa position basse. Il convient de relever que lors du passage du sélecteur 15 de sa configuration illustrée à la figure 12 à celle de la figure 4, le crochet 27 peut librement se déplacer relativement à la première pièce de transmission 17, sans rencontrer l'ergot d'entraînement 21 qui se trouve alors en position inactive. Une fois que le moyen de sécurité à l'ouverture 29 est retourné dans sa position basse, il est possible à l'utilisateur de faire subir au sélecteur 15 une rotation en sens horaire de sa première position vers sa deuxième position. Cela a pour effet d'entraîner, grâce au plot d'entraînement 28, la première pièce de transmission 17 en rotation horaire jusqu'à ce qu'elle atteigne sa deuxième position qui correspond au déverrouillage. La rotation de la première pièce de transmission 17 de sa première position vers sa deuxième position entraîne concomitamment le déplacement en position active de l'ergot d'entraînement 21.

Si l'utilisateur souhaite, à partir de cette configuration de déverrouillage, verrouiller à nouveau le couvercle, il procède alors à une rotation en sens antihoraire du sélecteur 15, ce qui a pour effet d'amener le crochet 27 contre l'ergot d'entraînement 21. Le crochet 27 permet ainsi de repousser l'ergot d'entraînement 21, lequel entraîne avec lui la première pièce de transmission 17 qui quitte sa deuxième position (correspondant au déverrouillage), laquelle forme donc une position d'équilibre instable. La première pièce de transmission 17 est alors brutalement rappelée par le ressort 210 et la force de rappel à laquelle est soumis le moyen de verrouillage / déverrouillage 2, ce qui entraîne concomitamment le retour en position inactive de la roue d'entraînement 21.

### POSSIBILITE D'APPLICATION INDUSTRIELLE

L'invention trouve son application industrielle dans la conception, la fabrication et l'utilisation d'appareils de cuisson.

## Revendications

1. Appareil de cuisson d'aliments sous pression comprenant une cuve et un couvercle (1) destinés à être associés pour former une enceinte de cuisson, un moyen de verrouillage / déverrouillage (2) mobile entre une position de verrouillage et une position de déverrouillage du couvercle (1) relativement à la cuve, un moyen de gestion de pression (6) mobile entre une pluralité de positions pour agir sur le niveau de pression régnant dans l'enceinte, un sélecteur (15) déplaçable manuellement pour commander le déplacement du moyen de verrouillage / déverrouillage (2) et celui dudit moyen de gestion de pression (6), ledit appareil étant **caractérisé en ce qu'**il comprend une première pièce de transmission (17) qui d'une part est mobile relativement à un dispositif mobile constitué par le moyen de verrouillage / déverrouillage (2) ou le moyen de gestion de pression (6) et d'autre part est conçue pour agir sur la position dudit dispositif mobile en réponse à un déplacement correspondant du sélecteur (15), ladite première pièce de transmission (17) étant en outre conçue pour pouvoir se déplacer pendant que le sélecteur (15) reste sensiblement immobile et/ou rester sensiblement immobile pendant que le sélecteur (15) se déplace.

2. Appareil selon la revendication 1 **caractérisé en ce que** le sélecteur (15) et la première pièce de transmission (17) coopèrent pour que la position instantanée de la première pièce de transmission (17) varie en fonction de la position instantanée du sélecteur (15) selon :
- une première loi lorsque le sélecteur (15) est déplacé d'une première position prédéterminée vers une deuxième position prédéterminée,
- une deuxième loi, différente de la première loi, lorsque le sélecteur (15) est déplacé de ladite deuxième position vers ladite première position.

3. Appareil selon la revendication 1 ou 2 **caractérisé en ce que** le sélecteur (15) est conçu pour se déplacer selon une course totale prédéterminée, ledit sélecteur (15) n'étant mécaniquement relié à la première pièce de transmission (17) que sur une fraction correspondante de ladite course.

4. Appareil selon l'une des revendications 1 à 3 **caractérisé en ce que** le sélecteur (15) est rotatif, et **en ce que** la première pièce de transmission (17) est rotative.

5. Appareil selon l'une des revendications 1 à 4 **caractérisé en ce que** le moyen de verrouillage / déverrouillage (2) est monté à translation sur le couvercle (1).

6. Appareil selon l'une des revendications 1 à 5 **caractérisé en ce que** le dispositif mobile est constitué par le moyen de verrouillage / déverrouillage (2), la première pièce de transmission (17) étant montée mobile entre une première position correspondant au verrouillage et une deuxième position correspondant au déverrouillage, ladite première pièce de transmission (17) étant soumise à un rappel élastique activable / désactivable vers sa première position.

7. Appareil selon la revendication 6 **caractérisé en ce que** le sélecteur (15) est mobile entre au moins une première position correspondant au verrouillage et une deuxième position correspondant au déverrouillage, le sélecteur (15) étant conçu pour activer ledit rappel élastique lorsqu'il est déplacé de sa deuxième position vers sa première position, autorisant ainsi le rappel élastique de la première pièce de transmission (17) de sa deuxième position vers sa première position.

8. Appareil selon la revendication 7 **caractérisé en ce que** le moyen de verrouillage / déverrouillage (2) est soumis à une force de rappel qui tend à le rappeler en permanence dans sa position de verrouillage, le moyen de verrouillage / déverrouillage (2) coopérant avec la première pièce de transmission (17) pour que ladite force de rappel d'une part contribue à maintenir la première pièce de transmission (17) dans sa deuxième position tant que la première pièce de transmission (17) se trouve dans sa deuxième position et d'autre part ne s'oppose pas ou contribue au rappel élastique de la première pièce de transmission (17) vers sa première position dès que la première pièce de transmission (17) s'est déplacé d'au moins une course prédéterminée de sa deuxième position vers sa première position.

9. Appareil selon l'une des revendications 6 à 8 **caractérisé en ce qu'**il comprend un moyen de sécurité à l'ouverture (29) sensible à la pression et/ou à la température régnant dans l'enceinte, ledit moyen de sécurité à l'ouverture (29) étant conçu pour adopter, tant que la pression et/ou la température régnant dans l'enceinte est supérieure à une valeur prédéterminée de sécurité, une position de blocage dans laquelle il interfère avec la trajectoire de déplacement de la première pièce de transmission (17) pour empêcher le déverrouillage.

10. Appareil selon la revendication 9 **caractérisé en ce qu'**il comprend une pièce de commande (24) interposée entre le sélecteur (15) et la première pièce de transmission (17) pour agir sur la position de cette dernière en réponse à un déplacement correspondant du sélecteur (15), ledit moyen de sécurité à l'ouverture (29) étant conçu pour interférer, en position de blocage, avec la trajectoire de déplacement de chacune desdites première pièce de transmission (17) et pièce de commande (24).

11. Appareil selon la revendication 10 **caractérisé en ce que** la pièce de commande (17) est conçue pour entraîner le moyen de sécurité à l'ouverture (29) en position de blocage lorsque le sélecteur (15) adopte au moins une position prédéterminée correspondante.

12. Appareil selon l'une des revendications 1 à 11 **caractérisé en ce qu'**il comprend un organe de régulation (7) de la pression régnant dans l'enceinte de cuisson à une valeur de consigne, le moyen de gestion de pression (6) comprenant un moyen de réglage (8) de cette valeur de consigne qui est mobile entre une pluralité de positions correspondant à des valeurs de consigne respectives, ledit sélecteur (15) étant conçu pour commander le déplacement dudit moyen de réglage (8).

13. Appareil selon l'une des revendications 1 à 12 **caractérisé en ce que** le moyen de gestion de pression (6) comprend un moyen de décompression mobile entre une position de décompression permettant de faire chuter la pression régnant dans l'enceinte et une position étanche n'entraînant sensiblement pas de chute de pression dans l'enceinte, le moyen de décompression étant conçu pour atteindre sa position de décompression quel que soit le niveau de pression régnant dans l'enceinte de cuisson, l'organe de régulation de pression (7) formant le moyen de décompression.

14. Appareil selon la revendication 13 **caractérisé en ce que** le dispositif mobile est constitué par le moyen de gestion de pression, l'organe de régulation (7) de la pression comprenant un orifice (9) de mise en communication de l'intérieur de l'enceinte avec l'extérieur et une soupape (10) tarée, le sélecteur étant conçu d'une part pour adopter au moins une position prédéterminée dans laquelle il force la soupape (10) tarée à adopter une position de libération de l'orifice (9) permettant la mise en communication de l'intérieur de l'enceinte avec l'extérieur, et d'autre part pour déplacer le moyen de réglage (8) de la valeur de consigne afin de modifier le niveau de pression de consigne, l'organe de régulation de pression (7) comprenant un corps élastique pour tarer ladite soupape (10) et une butée coulissante (12) formant le moyen de réglage (8) de la valeur de consigne, ledit corps élastique étant interposé entre ladite soupape (10) et la butée coulissante (12) et exerçant un effort d'appui sur cette dernière, le sélecteur (15) étant capable d'exercer sur ladite butée (12) un effort de réglage suffisant pour faire coulisser la butée et ajuster ainsi le tarage, ladite butée étant conçue pour entraîner la soupape (10) dans sa position de libération de l'orifice (9) lorsque ladite butée (12) est soumise à un effort de libération suffisant de même sens que l'effort d'appui, le sélecteur étant conçu pour adopter au moins une position prédéterminée dans laquelle il exerce cet effort de libération sur la butée (12) afin d'entraîner la décompression, l'organe de régulation (7) de la pression comprenant un conduit (14) au sein duquel est montée à coulissement ladite butée coulissante (12), le conduit (14) étant pourvu d'au moins une fente de guidage (32) tandis que la butée est pourvue d'un axe (33) monté à coulissement dans la fente de guidage (32) de façon à faire saillie de la surface extérieure du conduit (14), l'organe de régulation (7) de la pression comprenant en outre une bague de commande (34) pourvue d'une rampe de commande (35), ladite bague étant enfilée sur le conduit (14) de façon à pouvoir tourner autour du conduit et ainsi commander le déplacement de l'axe par rotation (33) de la rampe de commande (35), la première pièce de transmission comprenant ladite bague de commande (34).

15. Appareil selon l'une des revendications 1 à 14 **caractérisé en ce que** le dispositif mobile est constitué par le moyen de verrouillage / déverrouillage (2), ledit appareil comprenant en outre une deuxième pièce de transmission (18) qui d'une part est mobile relativement au moyen de gestion de pression (6) et d'autre part est conçue pour agir sur la position dudit moyen de gestion de pression (6) en réponse à un déplacement correspondant du sélecteur (15), ladite deuxième pièce de transmission (18) étant en outre conçue pour pouvoir se déplacer pendant que le sélecteur (15) reste sensiblement immobile et/ou rester sensiblement immobile pendant que le sélecteur (15) se déplace.

## Patentansprüche

1. Druckgargerät für Nahrungsmittel, umfassend einen Behälter und einen Deckel (1), die dazu bestimmt sind, verbunden zu werden, um einen Garbehälter zu bilden, ein Verriegelungs-/Entriegelungsmittel (2), das zwischen einer Verriegelungsposition und einer Entriegelungsposition des Deckels (1) in Bezug zum Behälter beweglich ist, ein Drucksteuerungsmittel (6), das zwischen einer Mehrzahl von Positionen beweglich ist, um auf das in dem Behälter herrschende Druckniveau einzuwirken, einen Wahlschalter (15), der manuell verschiebbar ist, um die Verschiebung des Verriegelungs-/Entriegelungsmittels (2) und jene des Drucksteuerungsmittels (6) zu steuern, wobei das Gerät **dadurch gekennzeichnet ist, dass** es ein erstes Übertragungsteil (17) umfasst, das einerseits in Bezug zu einer beweglichen Vorrichtung, bestehend aus dem Verriegelungs-/Entriegelungsmittel (2) oder dem Drucksteuerungsmittel (6) beweglich ist, und andererseits derart ausgeführt ist, dass es auf die Position der beweglichen Vorrichtung als Antwort auf eine entsprechende Verschiebung des Wahlschalters (15) einwirkt, wobei das erste Übertragungsteil (17) ferner derart ausgeführt ist, dass es sich verschieben kann, während der Wahlschalter (15) im Wesentlichen unbeweglich bleibt, und/oder im Wesentlichen unbeweglich bleiben kann, während sich der Wahlschalter (15) verschiebt.

2. Gerät nach Anspruch 1, **dadurch gekennzeichnet, dass** der Wahlschalter (15) und das erste Übertragungsteil (17) zusammenwirken, so dass die momentane Position des ersten Übertragungsteils (17) in Abhängigkeit von der momentanen Position des Wahlschalters (15) variiert, gemäß:
- einem ersten Gesetz, wenn der Wahlschalter (15) von einer ersten vorbestimmten Position in eine zweite vorbestimmte Position verschoben wird,
- einem zweiten Gesetz, das sich vom ersten Gesetz unterscheidet, wenn der Wahlschalter (15) von der zweiten Position in die erste Position verschoben wird.

3. Gerät nach Anspruch 1 oder 2, **dadurch gekennzeichnet, dass** der Wahlschalter(15) derart ausgeführt ist, dass er sich entlang eines vorbestimmten Gesamtweges verschiebt, wobei der Wahlschalter (15) mechanisch nur auf einem entsprechenden Teil des Weges mit dem ersten Übertragungsteil (17) verbunden ist.

4. Gerät nach einem der Ansprüche 1 bis 3, **dadurch gekennzeichnet, dass** der Wahlschalter (15) drehbar ist, und dass das erste Übertragungsteil (17) drehbar ist.

5. Gerät nach einem der Ansprüche 1 bis 4, **dadurch gekennzeichnet, dass** das Verriegelungs-/Entriegelungsmittel (2) in Translation auf dem Deckel (1) montiert ist.

6. Gerät nach einem der Ansprüche 1 bis 5, **dadurch gekennzeichnet, dass** die bewegliche Vorrichtung von dem Verriegelungs-/Entriegelungsmittel (2) gebildet ist, wobei das erste Übertragungsteil (17) beweglich zwischen einer ersten Position entsprechend der Verriegelung und einer zweiten Position entsprechend der Entriegelung montiert ist, wobei das erste Übertragungsteil (17) einer aktivierbaren/deaktivierbaren elastischen Rückstellung in seine erste Position unterworfen ist.

7. Gerät nach Anspruch 6, **dadurch gekennzeichnet, dass** der Wahlschalter (15) zwischen mindestens einer ersten Position entsprechend der Verriegelung und einer zweiten Position entsprechend der Entriegelung beweglich ist, wobei der Wahlschalter (15) derart ausgeführt ist, dass er die elastische Rückstellung aktiviert, wenn er von seiner zweiten Position in seine erste Position verschoben wird, wodurch die elastische Rückstellung des ersten Übertragungsteils (17) von seiner zweiten Position in seine erste Position gestattet wird.

8. Gerät nach Anspruch 7, **dadurch gekennzeichnet, dass** das Verriegelungs-/Entriegelungsmittel (2) einer Rückstellkraft unterworfen ist, die dazu tendiert, es permanent in seine Verriegelungsposition rückzustellen, wobei das Verriegelungs-/Entriegelungsmittel (2) mit dem ersten Übertragungsteil (17) zusammenwirkt, damit die Rückstellkraft einerseits dazu beiträgt, das erste Übertragungsteil (17) in seiner zweiten Position zu halten, solange sich das erste Übertragungsteil (17) in seiner zweiten Position befindet, und sich andererseits nicht der elastischen Rückstellung des ersten Übertragungsteils (17) in seine erste Position widersetzt oder dazu beiträgt, sobald sich das erste Übertragungsteil (17) um mindestens eine vorbestimmte Strecke von seiner zweiten Position in seine erste Position verschoben hat.

9. Gerät nach einem der Ansprüche 6 bis 8, **dadurch gekennzeichnet, dass** es ein Sicherheitsmittel (29) beim Öffnen umfasst, das für den Druck und/oder die Temperatur, die in dem Behälter herrschen, empfindlich ist, wobei das Sicherheitsmittel (29) beim Öffnen derart ausgeführt ist, dass es, solange der Druck und/oder die Temperatur, die in dem Behälter herrschen, größer als ein vorbestimmter Sicherheitswert sind, eine Blockierposition einnimmt, in der es mit der Verschiebestrecke des ersten Übertragungsteils (17) interferiert, um das Entriegeln zu verhindern.

10. Gerät nach Anspruch 9, **dadurch gekennzeichnet, dass** es ein Steuerteil (24) umfasst, das zwischen dem Wahlschalter (15) und dem ersten Übertragungsteil (17) angeordnet ist, um auf die Position dieses letztgenannten als Antwort auf eine entsprechende Verschiebung des Wahlschalters (15) einzuwirken, wobei das Sicherheitsmittel (29) beim Öffnen derart ausgeführt ist, dass es in der Blockierposition mit der Verschiebestrecke des ersten Übertragungsteils (17) und des Steuerteils (24) interferiert.

11. Gerät nach Anspruch 10, **dadurch gekennzeichnet, dass** das Steuerteil (17) derart ausgeführt ist, dass es das Sicherheitsmittel (29) beim Öffnen in Blockierposition bringt, wenn der Wahlschalter (15) mindestens eine entsprechende vorbestimmte Position einnimmt.

12. Gerät nach einem der Ansprüche 1 bis 11, **dadurch gekennzeichnet, dass** es ein Element (7) zum Regulieren des in dem Garbehälter herrschenden Drucks auf einen Sollwert umfasst, wobei das Drucksteuerungsmittel (6) ein Mittel (8) zum Regulieren dieses Sollwerts umfasst, das zwischen einer Mehrzahl von Positionen entsprechend jeweiligen Sollwerten beweglich ist, wobei der Wahlschalter (15) derart ausgeführt ist, dass er die Verschiebung des Reguliermittels (8) steuert.

13. Gerät nach einem der Ansprüche 1 bis 12, **dadurch gekennzeichnet, dass** das Drucksteuerungsmittel (6) ein Druckminderungsmittel umfasst, das zwischen einer Druckminderungsposition, die es ermöglicht, den in dem Behälter herrschenden Druck abfallen zu lassen, und einer dichten Position, die im Wesentlichen nicht zu einem Druckabfall in dem Behälter führt, beweglich ist, wobei das Druckminderungsmittel derart ausgeführt ist, dass es seine Druckminderungsposition unabhängig von dem in dem Garbehälter herrschenden Druckniveau erreicht, wobei das Druckregulierungselement (7) das Druckminderungsmittel bildet.

14. Gerät nach Anspruch 13, **dadurch gekennzeichnet, dass** die bewegliche Vorrichtung von dem Drucksteuerungsmittel, dem Element (7) zur Regulierung des Drucks, umfassend eine Öffnung (9) zur Verbindung des Inneren des Behälters mit außen und ein austariertes Ventil (10), gebildet ist, wobei der Wahlschalter derart ausgeführt ist, dass er einerseits mindestens eine vorbestimmte Position einnimmt, in der er das austarierte Ventil (10) dazu veranlasst, eine Position zur Freigabe der Öffnung (9) einzunehmen, die die Verbindung des Inneren des Behälters mit außen ermöglicht, und andererseits das Mittel (8) zur Einstellung des Sollwerts verschiebt, um das Solldruckniveau zu verändern, wobei das Druckregulierungselement (7) einen elastischen Körper, um das Ventil (10) auszutarieren, und einen Gleitanschlag (12) umfasst, der das Mittel (8) zur Einstellung des Sollwerts bildet, wobei der elastische Körper zwischen dem Ventil (10) und dem Gleitanschlag (12) angeordnet ist und eine Stützkraft auf diesen letztgenannten ausübt, wobei der Wahlschalter (15) geeignet ist, auf den Anschlag (12) eine ausreichend Einstellkraft auszuüben, um den Anschlag zum Gleiten zu bringen und so die Tarierung einzustellen, wobei der Anschlag derart ausgeführt ist, dass er das Ventil (10) in seine Position zur Freigabe der Öffnung (9) bringt, wenn der Anschlag (12) einer ausreichenden Freigabekraft mit derselben Richtung wie die Stützkraft unterzogen wird, wobei der Wahlschalter derart ausgeführt ist, dass er mindestens eine vorbestimmte Position einnimmt, in der er diese Freigabekraft auf den Anschlag (12) ausübt, um die Druckminderung zu bewirken, wobei das Element (7) zur Regulierung des Drucks eine Leitung (14) umfasst, in der der Gleitanschlag (12) gleitend montiert ist, wobei die Leitung (14) mit mindestens einem Führungsschlitz (32) versehen ist, während der Anschlag mit einer Achse (33) versehen ist, die in dem Führungsschlitz (32) gleitend montiert ist, so dass sie aus der Außenfläche der Leitung (14) hinausragt, wobei das Element (7) zur Regulierung des Drucks ferner einen Steuerring (34) umfasst, der mit einer Steuerrampe (35) versehen ist, wobei der Ring auf die Leitung (14) geschoben wird, so dass er sich um die Leitung drehen und so die Verschiebung der Achse durch Drehung (33) der Steuerrampe (35) steuern kann, wobei das erste Übertragungsteil den Steuerring (34) umfasst.

15. Gerät nach einem der Ansprüche 1 bis 14, **dadurch gekennzeichnet, dass** die bewegliche Vorrichtung von dem Verriegelungs-/Entriegelungsmittel (2) gebildet ist, wobei das Gerät ferner ein zweites Übertragungsteil (18) umfasst, das einerseits in Bezug zum Drucksteuerungsmittel (6) beweglich ist und andererseits derart ausgeführt ist, dass es auf die Position des Drucksteuerungsmittels (6) als Antwort auf eine entsprechende Verschiebung des Wahlschalters (15) einwirkt, wobei das zweite Übertragungsteil (18) ferner derart ausgeführt ist, dass es sich verschieben kann, während der Wahlschalter (15) im Wesentlichen unbeweglich bleibt, und/oder im Wesentlichen unbeweglich bleiben kann, während sich der Wahlschalter (15) verschiebt.

## Claims

1. Food pressure-cooking appliance comprising a pot and a lid (1) intended to be associated with each other to form a cooking chamber, a locking / unlocking means (2) movable between a position for locking and a position for unlocking the lid (1) relative to the pot, a pressure management means (6) movable between a plurality of positions to act on the level of pressure inside the chamber, a selector (15) manually movable to control the displacement of the locking / unlocking means (2) and that of said pressure management means (6), said appliance being **characterized in that** it comprises a first transmission part (17) that, on the one hand, is movable relative to a movable device consisted by the locking / unlocking means (2) or by the pressure management means (6), and on the other hand, is adapted to act on the position of said movable device in response to a corresponding displacement of the selector (15), said first transmission part (17) being further adapted so as to be able to move while the selector (15) remains substantially stationary and/or to remain substantially stationary while the selector (15) moves.

2. The appliance according to claim 1, **characterized in that** the selector (15) and the first transmission part (17) cooperate so that the instantaneous position of the first transmission part (17) varies as a function of the instantaneous position of the selector (15), in accordance to:
- a first law when the selector (15) is displaced from a first predetermined position to a second predetermined position,
- a second law, different from the first law, when the selector (15) is displaced from said second position to said first position.

3. The appliance according to claim 1 or 2, **characterized in that** the selector (15) is adapted to move over a predetermined total stroke, said selector (15) being mechanically connected to the first transmission part (17) over only a corresponding fraction of said stroke.

4. The appliance according to one of claims 1 to 3, **characterized in that** the selector (15) is rotating, and **in that** the first transmission part (17) is rotating.

5. The appliance according to one of claims 1 to 4, **characterized in that** the locking / unlocking means (2) is mounted for translation on the lid (1).

6. The appliance according to one of claims 1 to 5, **characterized in that** the movable device is consisted by the locking / unlocking means (2), the first transmission part (17) being mounted movable between a first position corresponding to the locking and a second position corresponding to the unlocking, said first transmission part (17) being subjected to an activatable / deactivatable elastic return back to its first position.

7. The appliance according to claim 6, **characterized in that** the selector (15) is movable between at least a first position corresponding to the locking and a second position corresponding to the unlocking, the selector (15) being adapted to activate said elastic return when it is moved from its second position to its first position, hence allowing the elastic return of the first transmission part (17) from its second position back to its first position.

8. The appliance according to claim 7, **characterized in that** the locking / unlocking means (2) is subjected to a return force that tends to permanently return it back to its locking position, the locking / unlocking means (2) cooperating with the first transmission part (17) so that said return force, on the one hand, contributes to hold the first transmission part (17) in its second position as long as the first transmission part (17) is in its second position, and on the other hand, does not go against, or contributes to, the elastic return of the first transmission part (17) back to its first position as soon as the first transmission part (17) has moved over at least a predetermined stroke from its second position to its first position.

9. The appliance according to one of claims 6 to 8, **characterized in that** it comprises an opening safety means (29) sensitive to the pressure and/or the temperature inside the chamber, said opening safety means (29) being adapted to adopt, as long as the pressure and/or the temperature inside the chamber is higher than a predetermined safety value, a blocking position in which it interferes with the trajectory of displacement of the first transmission part (17) to prevent the unlocking.

10. The appliance according to claim 9, **characterized in that** it comprises a control part (24) interposed between the selector (15) and the first transmission part (17) to act on the position of the latter in response to a corresponding displacement of the selector (15), said opening safety means (29) being adapted to interfere, in the blocking position, with the trajectory of displacement of each of said first transmission part (17) and control part (24).

11. The appliance according to claim 10, **characterized in that** the control part (17) is adapted to drive the opening safety means (29) to the blocking position when the selector (15) adopts at least one corresponding predetermined position.

12. The appliance according to one of claims 1 to 11, **characterized in that** it comprises a member (7) for regulating the pressure inside the cooking chamber at a set value, the pressure management means (6) comprising a means (8) for setting this set value, which is movable between a plurality of positions corresponding to respective set values, said selector (15) being adapted to control the displacement of said setting means (8).

13. The appliance according to one of claims 1 to 12, **characterized in that** the pressure management means (6) comprises a decompression means movable between a decompression position for making the pressure inside the chamber decrease and a sealed position generating substantially no pressure decrease in the chamber, the decompression means being adapted to reach its decompression position whatever the level of pressure inside the cooking chamber, the pressure regulating member (7) forming the decompression means.

14. The appliance according to claim 13, **characterized in that** the movable device is consisted by the pressure management means (6) the pressure regulating member (7) comprising an orifice (9) for placing the inside of the chamber in communication with the outside and a calibrated valve (10), the selector being adapted, on the one hand, to adopt at least one predetermined position, in which it forces the calibrated valve (10) to adopt a position for clearing the orifice (9), allowing the inside of the chamber to be placed in communication with the outside, and on the other hand, the set-value setting means (8) to be displaced in order to modify the set level of pressure, the pressure regulating member (7) comprising an elastic body to calibrate said valve (10), and a sliding stop (12) forming the set-value setting means (8), said elastic body being interposed between said valve (10) and the sliding stop (12) and exerting a pressing effort to the latter, the selector (15) being capable of exerting on said stop (12) a setting effort that is sufficient to make the stop sliding and to therefore adjust the calibration said stop (12) being adapted to drive the valve (10) to its position for clearing the orifice (9) when said stop (12) is subjected to a sufficient clearing effort, of same direction as the pressing effort, the selector being adapted to adopt at least one predetermined position, in which it exerts this clearing effort on the sliding stop (12) so as to cause the decompression, the pressure regulating member (7) comprising a duct (14) within which said sliding stop (12) is slidingly mounted, the duct (14) being provided with at least one guiding slot (32), whereas the stop is provided with a shaft (33) slidingly mounted in the guiding slot (32) so as to protrude from the external surface of the duct (14), the pressure regulating member (7) further comprising a control ring (34) provided with a control ramp (35), said ring being threaded onto the duct (14) so as to be able to turn around the duct and therefore to control the displacement of the shaft (33) by rotation of the control ramp (35), the first transmission part comprising said control ring (34).

15. The appliance according to one of claims 1 to 14, **characterized in that** the movable device is consisted by the locking / unlocking means (2), said appliance further comprising a second transmission part (18) that, on the one hand, is movable relative to the pressure management means (6), and on the other hand, is adapted to act on the position of said pressure management means (6) in response to a corresponding displacement of the selector (15), said second transmission part (18) being further adapted so as to be able to move while the selector (15) remains substantially stationary and/or to remain substantially stationary while the selector (15) moves.
